# EUROPEAN PATENT APPLICATION

(11) **EP 4 459 703 A1**
(43) Date of publication of application: **06.11.2024**
(21) Application number: 22916139.3
(22) Date of filing: 27.12.2022
(51) Int. Cl.: H01M 4/139, H01M 4/62

(54) **DISPERSANT COMPOSITION FOR POWER STORAGE DEVICE ELECTRODES**

(30) Priority: 27.12.2021 JP 2021213245; 27.07.2022 JP 2022119910
(71) Applicant: Kao Corporation, Tokyo 103-8210 (JP)
(72) Inventor: FUKUDA, Taiki, Wakayama-shi, Wakayama 640-8580 (JP); GOTO, Hideki, Wakayama-shi, Wakayama 640-8580 (JP); ITOI, Akito, Wakayama-shi, Wakayama 640-8580 (JP); OKI, Kazuo, Wakayama-shi, Wakayama 640-8580 (JP)
(74) Representative: Hoffmann Eitle
(86) International application number: PCT/JP2022/048377
(87) International publication number: WO 2023/127917

(57) **Abstract**

An aspect of the present disclosure relates to a dispersant composition for an electrode of a power storage device. The dispersant composition contains a polymer containing a repeating unit represented by the following general formula (1) and an organic solvent. The organic solvent has a relative permittivity of 25.0 or more and 35.0 or less at 25°C. The dispersant composition preferably further contains one or more than one type of organic amine B2 soluble in the organic solvent. The organic amine B2 has an SP value of preferably 9.5 (cal/cm³)^{1/2} or more and 14 (cal/cm³)^{1/2} or less and a boiling point of preferably 260°C or less.

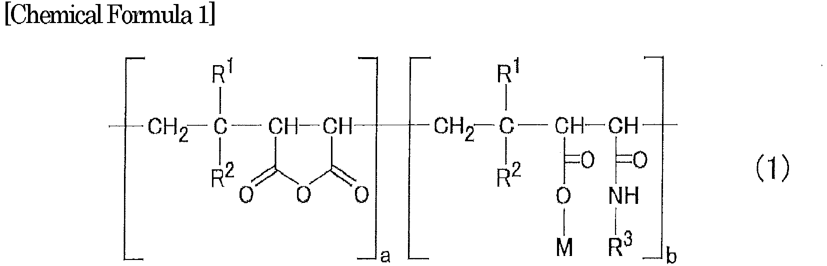

## Description

### Technical Field

The present invention relates to a dispersant composition for an electrode of a power storage device.

### Background Art

In recent years, efforts to curb global warming have spurred the development of electric vehicles. Electric vehicles do not emit carbon dioxide, but have short mileage and long battery charging time, compared to gasoline-powered vehicles. To reduce the charging time, the rate of electron transfer in a positive electrode should be increased. At present, a carbon material is used as a conductive material for a positive electrode of a non-aqueous electrolyte battery. However, the use of the carbon material increases the viscosity of a conductive material slurry or positive electrode paste, which may lead to poor handleability. Therefore, a reduction in the viscosity of the slurry or paste is desirable. The viscosity of the slurry or paste varies greatly depending on whether the dispersibility of the carbon material is good or not.

JP S41 (1966)-17852 B (Patent Document 1) discloses a dispersant that is used in a non-aqueous polar solvent. The dispersant is obtained by the reaction of a copolymer of diisobutylene and maleic anhydride with ammonia or a saturated lower amine at a reaction rate of approximately 100%.

JP 2018-168285 A (Patent Document 2) discloses a dispersant composition for printing ink. The dispersant composition contains an amidated product obtained by amidating a copolymer of diisobutylene and maleic anhydride with stearylamine at a rate of 100%, and methyl isobutyl ketone (MIBK) as an organic solvent.

JP 2009-138115 A (Patent Document 3) discloses an in-oil dispersant composition for electronic materials. The in-oil dispersant composition contains an amidated product obtained by amidating a copolymer of diisobutylene and maleic anhydride with oleylamine, and propylene glycol methyl ether acetate (PEGMA) as an organic solvent.

### Disclosure of the Invention

An aspect of the present disclosure relates to a dispersant composition for an electrode of a power storage device. The dispersant composition contains a polymer containing a repeating unit represented by the following general formula (1) and an organic solvent. The organic solvent has a relative permittivity of 25.0 or more and 35.0 or less at 25°C.

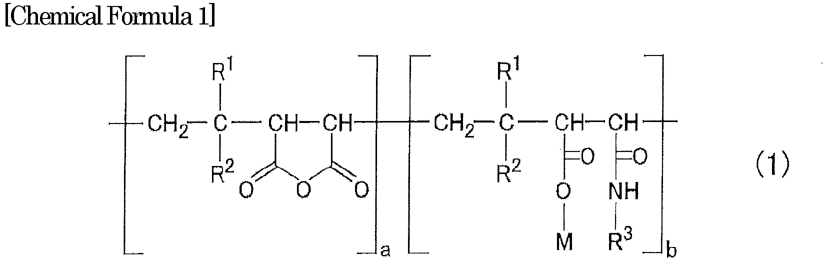

In the general formula (1), R¹ represents hydrogen or a methyl group,
R² represents hydrogen, CₙH₂ₙ₊₁, i-CₙH₂ₙ₊₁, C₆H₅, or an aromatic group with or without a substituent, and n represents 1 or more and 10 or less,
R³ represents CₘH₂ₘ₊₁ or i-CₘH₂ₘ₊₁, and m represents 16 or more and 22 or less,
M represents hydrogen, NH₄, a metal that gives a salt soluble in the organic solvent, or organic ammonium soluble in the organic solvent, and
a and b each represent a mole fraction, provided that a + b = 1, and b satisfies 0.50 ≤ b ≤ 1.00.

An aspect of the present disclosure relates to a carbon material-based conductive material slurry that contains the dispersant composition of the present disclosure and carbon material-based conductive materials. An organic solvent containedin the carbon material-based conductive material slurry has a relative permittivity of 25.0 or more and 35.0 or less at 25°C.

An aspect of the present disclosure relates to a positive electrode paste for a power storage device. The positive electrode paste contains the dispersant composition of the present disclosure, a positive electrode active material, and carbon material-based conductive materials. An organic solvent contained in the positive electrode paste has a relative permittivity of 25.0 or more and 35.0 or less at 25°C.

An aspect of the present disclosure relates to a method for producing a positive electrode for a power storage device by using the positive electrode paste of the present disclosure.

An aspect of the present disclosure relates to a method for producing a power storage device by using the positive electrode of the present disclosure.

### Description of the Invention

Patent Document 1 teaches that a dispersant having a long-chain alkyl group is particularly effective for the dispersion of carbon materials in a nonpolar solvent, and a dispersant having a short-chain alkyl group is particularly effective for the dispersion of carbon materials in a polar solvent. On the other hand, it is desirable that the resistance of an electrode for a storage battery device be further reduced by improving the dispersibility of carbon materials. Under the circumstances, the dispersant having a short-chain alkyl group, which is deemed effective for the dispersion of carbon black in Patent Document 1, may lead to poor dispersion of carbon material-based conductive materials in a polar solvent that is used to produce an electrode for a storage battery device. This problem is particularly prominent when the carbon materials are carbon nanotubes having a high aspect ratio.

Therefore, to form a low-resistance positive electrode coating, a dispersant is required that can achieve a high degree of dispersion of carbon material-based conductive materials even in a polar solvent for the preparation of a positive electrode paste.

The dispersant of Patent Document 2 is used in methyl isobutyl ketone (MIBK) and the dispersant of Patent Document 3 is usedin propylene glycol methyl ether acetate. Both solvents are polar solvents with a low relative permittivity. However, these dispersants cannot ensure good dispersibility because of the low relative permittivity of the solvents and are not suitable for the preparation of a positive electrode paste.

With the foregoing in mind, in one aspect, the present disclosure provides a dispersant composition for an electrode of a power storage device that enables the preparation of a conductive material slurry containing carbon material-based conductive materials with good dispersibility. The present disclosure also provides a conductive material slurry and a positive electrode paste, each containing the dispersant composition.

Moreover, the present disclosure provides a method for producing a positive electrode for a power storage device by using the positive electrode paste, and a method for producing a power storage device by using the positive electrode for a power storage device.

The present disclosure is based on the new findings that the dispersibility of carbon material-based conductive materials in a conductive material slurry can be improved by using an organic solvent with a high relative permittivity, specifically with a relative permittivity of 25.0 or more and 35.0 or less at 25°C for a polymer having a long-chain alkyl group with 16 to 22 carbon atoms.

The details of the mechanism of the effects of the present disclosure are not fully clear, but can be assumed as follows.

The present inventors have found that a dispersant (polymer) needs to have a long-chain alkyl group with a specific chain length, i.e., with 16 to 22 carbon atoms in the side chain to exhibit excellent adsorbability on the carbon material-based conductive materials. On the other hand, the general view is that the presence of the long-chain alkyl group with such a specific chain length will increase the hydrophobicity of the polymer, and thus reduce the solubility of the polymer in a polar solvent. However, the present inventors have also found that the polymer containing a long-chain alkyl group R³ with a specific chain length is properly dissolved in a polar solvent with a predetermined relative permittivity. The reason for this may be that the long-chain alkyl group R³ is solvatedin the polar solvent with a predetermined relative permittivity, which in turn reduces the hydrophobic interaction between the long-chain alkyl groups. Moreover, it is considered that the solubility of the polymer in the polar solvent can be improved by the combination of the chain length of the long-chain alkyl group R³ and the relative permittivity of the polar solvent, and the improved solubility of the polymer, together with the following functions (a) to (c) of the components of the polymer represented by the general formula (1), can achieve high dispersion of the carbon material-based conductive materials.
(a) The content of the long-chain alkyl group R³ satisfies 0.50 ≤ b ≤ 1.00 in the general formula (1), resulting in high adsorbability of the dispersant on the carbon material-based conductive materials.
(b) R¹ and R² contribute to the solubility of the polymer in the polar solvent with a predetermined relative permittivity.
(c) Carboxy groups derived from maleic anhydride that are produced by introduction of the long-chain alkyl group R³, or salt structures formed by neutralization of the carboxy groups with ammonia or amines exert electrostatic repulsion and serve to improve the dispersibility of the carbon material-based conductive materials in the polar solvent with a predetermined relative permittivity.

However, the present disclosure should not be construed as being limited to these mechanisms.

In one aspect, the present disclosure can provide a dispersant composition for an electrode of a power storage device that enables the preparation of a conductive material slurry containing carbon material-based conductive materials with good dispersibility.

In one aspect, the present disclosure can provide a carbon material-based conductive material slurry that contains the dispersant composition of the present disclosure and makes the dispersibility of the carbon material-based conductive materials better.

In one aspect, the present disclosure can provide a positive electrode paste for a power storage device that contains the dispersant composition of the present disclosure and is able to form a positive electrode coating with a low resistance value.

In one aspect, the present disclosure can provide a low-resistance positive electrode for a power storage device, since the positive electrode is produced by using the positive electrode paste of the present disclosure.

In one aspect, the present disclosure can provide a low-resistance power storage device, since the power storage device is produced by using the positive electrode of the present disclosure.

### <Dispersant composition for electrode of power storage device>

In one aspect, the present disclosure relates to a dispersant composition for an electrode of a power storage device (also referred to as a "dispersant composition of the present disclosure" in the following). The dispersant composition of the present disclosure contains a polymer containing a repeating unit represented by the following general formula (1) and an organic solvent. The organic solvent has a relative permittivity of 25.0 or more and 35.0 or less at 25°C.

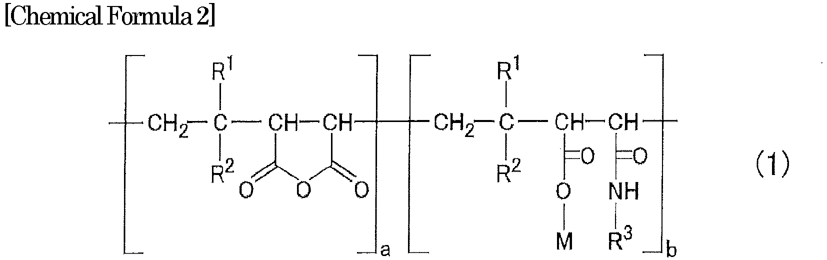

In the general formula (1), R¹ represents hydrogen or a methyl group,
R² represents hydrogen, CₙH₂ₙ₊₁, i-CₙH₂ₙ₊₁, C₆H₅, or an aromatic group with or without a substituent, and n represents 1 or more and 10 or less,
R³ represents CₘH₂ₘ₊₁ or i-CₘH₂ₘ₊₁, and m represents 16 or more and 22 or less,
M represents hydrogen, NH₄, a metal that gives a salt soluble in the organic solvent, or organic ammonium soluble in the organic solvent, and
a and b each represent a mole fraction, provided that a + b = 1, and b satisfies 0.50 ≤ b ≤ 1.00.

In one aspect, the dispersant composition of the present disclosure contains a polymer satisfying 0.50 ≤ b ≤ 1.00 in the general formula (1) and an organic solvent. The organic solvent has a relative permittivity of 25.0 or more and 35.0 or less at 25°C.

The dispersant composition of the present disclosure can be used to prepare a conductive material slurry containing carbon material-based conductive materials with good dispersibility. Therefore, the present disclosure can provide the conductive material slurry with improved dispersibility of the carbon material-based conductive materials, and a positive electrode paste for a power storage device that is able to form a positive electrode coating with a low resistance value.

### (Polymer)

A polymer that contains a repeating unit represented by the general formula (1) of the dispersant composition of the present disclosure (referred to as a "polymer A" for the sake of convenience in the following) is a dispersant. The polymer A is obtained by amidation of a copolymer of an olefin and maleic anhydride to introduce a long-chain alkyl group R³, and optionally by neutralization of carboxy groups resulting from the introduction of the long-chain alkyl group R³.

The repeating unit of the general formula (1) includes a constitutional unit I represented by the following general formula (2) and a constitutional unit II represented by the following general formula (3). The arrangement of the constitutional unit I and the constitutional unit II in the repeating unit of the general formula (1) may be either a block sequence or a random sequence, but the random sequence is preferred from the viewpoint of the productivity of the polymer.

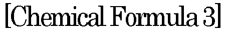

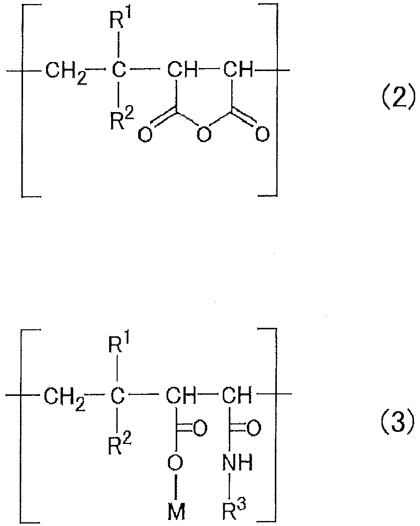

Both the constitutional unit I and the constitutional unit II include a unit represented by the following general formula (4). This unit is a component derived from an olefin and is responsible for solubility in the organic solvent. M in the constitutional unit II is a component that contributes to the dispersion of the carbon material-based conductive materials in the organic solvent. R³ in the constitutional unit II is a hydrophobic group that functions as an anchoring group to the carbon material-based conductive materials.

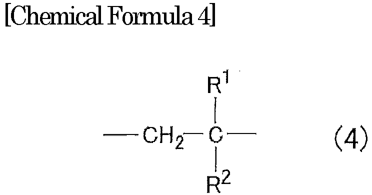

In the general formula (4), R¹ represents hydrogen or a methyl group, and preferably represents a methyl group from the viewpoint of solubility in the organic solvent.

In the general formula (4), R² represents hydrogen, CₙH₂ₙ₊₁, i-CₙH₂ₙ₊₁, C₆H₅, or an aromatic group with or without a substituent, preferably represents CₙH₂ₙ₊₁, i-CₙH₂ₙ₊₁, C₆H₅, or an aromatic group with or without a substituent, more preferably represents CₙH₂ₙ₊₁, i-CₙH₂ₙ₊₁, or a naphthyl or phenyl group with or without a substituent, and further preferably represents CₙH₂ₙ₊₁ or i-CₙH₂ₙ₊₁ from the viewpoint of solubility in the organic solvent.

The carbon number n of R² is 1 or more, and preferably 2 or more from the viewpoint of the adsorbability of the polymer A on the carbon material-based conductive materials, ease of synthesis of the polymer A, and the availability of monomers. From the same viewpoint, the carbon number n is 10 or less, and preferably 7 or less.

The following general formula (5) of the constitutional unit II is obtained by amidation of a unit represented by the following general formula (6) to introduce a long-chain alkyl group R³, and optionally by neutralization of a carboxy group.

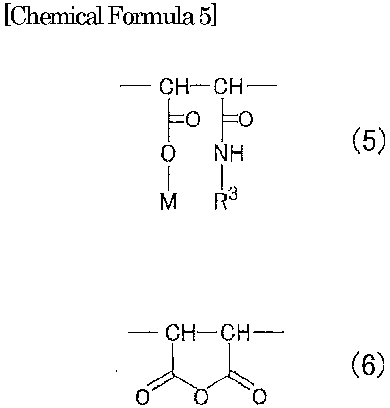

In the general formula (5), R³ represents CₘH₂ₘ₊₁ or i-CₘH₂ₘ₊₁. The carbon number m of R³ is 16 or more, and preferably 18 or more from the viewpoint of the adsorbability of the polymer A on the carbon material-based conductive materials. From the same viewpoint, the carbon number m is 22 or less, and preferably 20 or less.

From the viewpoint of dispersibility, the polymer A may be an unneutralized polymer, a partially neutralized polymer in which some of the carboxy groups resulting from the introduction of R³ are neutralized, or a neutralized polymer in which all of those carboxy groups are neutralized. In the general formula (5), M preferably represents, e.g., hydrogen, NH₄, a metal that gives a salt soluble in the organic solvent, or organic ammonium soluble in the organic solvent, and more preferably represents hydrogen from the viewpoint of the dispersibility of the carbon material-based conductive materials.

The polymer Ais an amidated product of a copolymer of an olefin and maleic anhydride, and b in the general formula (1) is a mole fraction, provided that a + b = 1, and is also referred to as an amidation rate or a modification rate. The relationship expressed by 0.50 ≤ b ≤ 1.00 means that the modification rate b from the unit of the general formula (6) to the unit of the general formula (5) is 50 mol% when b is 0.50, and that the modification rate b is 100 mol% when b is 1.

In the polymer A, b is 0.50 or more, preferably 0.55 or more, more preferably 0.60 or more, even more preferably 0.65 or more, still more preferably 0.70 or more, and further preferably 1.00 from the viewpoint of improving the adsorbability of the polymer A on the carbon material-based conductive materials. The polymer A may be one type or a mixture of two or more types selected from polymers with a modification rate b of 0.50 or more and 1.00 or less.

In the present disclosure, the modification rate b can be calculated from the amount of an amine compound used with respect to a monomer II (as will be described later) for polymerization to produce the polymer A

A monomer that provides the unit of the general formula (4) (also referred to as a "monomer I" in the following) is preferably at least one selected from the group consisting of α-olefins having 2 to 13 carbon atoms from the viewpoint of good solubility in the organic solvent. Example of the monomer I include diisobutylene, isobutylene, 1-pentene, 1-heptene, 1-butene, 1-octene, 1-decene, styrene, and α-methyl styrene. Among them, the monomer I is preferably at least one of styrene, diisobutylene (2,4,4-trimethylpentene-1), or isobutylene, and more preferably diisobutylene (2,4,4-trimethylpentene-1) from the viewpoint of good solubility in the organic solvent.

A monomer that provides the unit of the general formula (6) (also referred to as a "monomer IT' in the following) is, e.g., maleic anhydride or maleic acid The monomer II is preferably a monomer with a reactive structure such as acid anhydride, and more preferably maleic anhydride because an alkyl group can easily be introduced by amidation.

The polymer A may be produced by, e.g., a method used for polymerization of vinyl monomers. For example, the monomer I and the monomer II are mixed in a solvent and polymerized by solution polymerization. Then, an amine compound having an alkyl group R³ with 16 to 22 carbon atoms is further added so that the alkyl group R³ with 16 to 22 carbon atoms is introduced into some or all of the constitutional units derived from the monomer II.

Moreover, a neutralizer is added as needed to the solution containing the modified copolymer thus obtained to neutralize some or all of the carboxylic acids. Thereafter, the solvent in the solution containing the modified copolymer is replaced with an aqueous solvent, if necessary. As a result of the solvent replacement, the modified copolymer precipitates out of the solution, and the dispersant (polymer A) of the present disclosure is provided

The amine compound having an alkyl group R³ with 16 to 22 carbon atoms may be, e.g., cetylamine, stearylamine, icosylamine, or behenylamine.

Examples of the solvent used for the synthesis of the polymer Ainclude organic solvents such as hydrocarbons (hexane and heptane), aromatic hydrocarbons (toluene, xylene, etc.), ketones (acetone and methyl ethyl ketone), ethers (tetrahydrofuran and diethylene glycol dimethyl ether), and N -methylpyrrolidone. The amount of the solvent is preferably 0.5 to 10 times the total amount of the monomers in terms of mass ratio.

The polymerization initiator used for the above polymerization may be any known radical polymerization initiator. Examples of the polymerization initiator include azo polymerization initiators, hydroperoxides, dialkyl peroxides, diacyl peroxides, and ketone peroxides. The amount of the polymerization initiator is preferably 0.01 to 5 mol% with respect to the total amount of the monomer components. The polymerization reaction is preferably performed at a temperature of 40 to 180°C under a nitrogen flow, and the reaction time is preferably 0.5 to 20 hours. Moreover, any known chain transfer agent may be used in the above polymerization. Examples of the chain transfer agent include isopropyl alcohol and a mercapto compound such as mercaptoethanol

In the present disclosure, M in the dispersant (polymer A) represents hydrogen, NH₄, a metal that gives a salt soluble in the organic solvent, or organic ammonium derived from an organic amine soluble in the organic solvent. Examples of the neutralizer that provides these structures include ammonia, an organic amine B1, and alkali metal hydroxides such as sodium hydroxide and potassium hydroxide.

The organic amine B1 may be any amine compound that functions as a neutralizer. Specific examples of the organic amine B1 include the following: methylamine (SP value (solubility parameter): 8.85 (cal/cm³)^{1/2}, boiling point: -6.3°C, this also applies to the values in the parentheses below); dimethylamine (7.80, 7°C); ethylamine (7.93, 16.6°C); dimethylbenzylamine (9.1, 180°C); methylbenzylamine (9.8, 186°C); 2-N-dibutylaminoethanol (10.0, 226°C); 1-phenylmethanamine (10.5, 184°C); N,N-chethylaminoethanol (10.7, 162°C); 2-dimethylaminoethanol (11.3, 134°C); 1-amino-2-butanol(11.9, 169°C); 2-(ethylamino)ethanol (12.0, 169°C); 2-amino-2-methyl-1-propanol (12.2, 185°C); DL-1-amino-2propanol (12.4, 160°C); N-methyl-2-aminoethanol (12.5, 175°C); 1-(2-hydroxyethyl)piperazine (12.98, 246°C); and N-ethyldiethanolamine (13.4, 251°C).

The SP value has been defined based on the development of the regular solution theory, and used as an indicator of the solubility of a compound. In the present disclosure, the SP value is determined by the Fedors calculation method, which is one of the methods to estimate a solubility parameter from a molecular structure. The details of the Fedors calculation method are describedin POLYMER ENGINEERING AND SCIENCE, February 1974, vol. 14, No. 2 "A Method for Estimating Both the Solubility Parameters and Molar Volumes of Liquids."

The dispersant (polymer A) of the present disclosure is a modified copolymer obtained by amidation of a copolymer of an olefin and maleic anhydride to form an amidated product, and optionally by neutralization of the amidated product. The weight average molecular weight of the copolymer of an olefin and maleic anhydride before the amidation is preferably 3000 or more, more preferably 5000 or more, and further preferably 6000 or more from the viewpoint of the adsorbability of the polymer A on the carbon material-based conductive materials. Furthermore, the weight average molecular weight of the copolymer is preferably 100000 or less, more preferably 70000 or less, and further preferably 50000 or less from the viewpoint of the solubility of the polymer Ain the organic solvent, the dispersibility of the carbon material-based conductive materials, and a reduction in the viscosity of the slurry. In the present disclosure, the weight average molecular weight of the copolymer of an olefin and maleic anhydride before the amidation is a value measured by GPC (gel permeation chromatography), and the details of the measurement conditions will be described in Examples.

The content of the polymer A in the dispersant composition of the present disclosure is preferably 0.1% by mass or more, more preferably 1% by mass or more, even more preferably 10% by mass or more, still more preferably 15% by mass or more, and further preferably 20% by mass or more from the viewpoint of productivity. Furthermore, the content of polymer A is preferably 50% by mass or less, more preferably 45% by mass or less, and further preferably 40% by mass or less from the viewpoint of the solubility of the polymer (A) in the organic solvent. When the polymer A is a combination of two or more types, the content of the polymer A is the total content of the two or more types.

### (Organic amine B2)

In one aspect, the dispersant composition of the present disclosure preferably contains an organic amine soluble in the organic solvent (also referred to as an "organic amine B2 of the present disclosure" to distinguish it from the organic amine B 1 used for the synthesis of the polymer A) from the viewpoint of the effect of reducing the viscosities of the conductive material slurry and the positive electrode paste, and also from the viewpoint of reducing the direct current resistance of a power storage device. The organic amine B2 is preferably an amine compound with an SP value of 9.5 (cal/cm³)^{1/2} or more and 14.0 (cal/cm³)^{1/2} or less from the viewpoint of reducing the direct current resistance of the power storage device. Moreover, the organic amine B2 preferably has a boiling point of 260°C or less from the viewpoint of reducing the residual amine that would be present in the electrode.

The SP value of the organic amine B2 of the present disclosure is preferably 9.5 (cal/cm³)^{1/2} or more, more preferably 10.5 (cal/cm³)^{1/2} or more, and further preferably 11.0 (cal/cm³)^{1/2} or more from the viewpoint of reducing the direct current resistance of the power storage device. From the same viewpoint, the SP value of the organic amine B2 is preferably 14.0 (cal/cm³)^{1/2} or less, more preferably 13.5 (cal/cm³)^{1/2} or less, and further preferably 13.0 (cal/cm³)^{1/2} or less.

The boiling point of the organic amine B2 of the present disclosure is preferably 260°C or less. From the viewpoint of reducing the resistance of an electrode of a power storage device, the boiling point of the organic amine B2 is preferably a temperature at which the organic amine B2 evaporates during drying in the production process of the electrode, more preferably not more than the boiling point (202°C) of N-methylpyrrolidone (NMP), which is often used as a solvent of the positive electrode paste, and further preferably 190°C or less for recycling of NMP. The lower limit of the boiling point of the organic amine B2 of the present disclosure is preferably 100°C or more, and more preferably 120°C or more from the viewpoint of ease of handling.

Preferred examples of the organic amine B2 of the present disclosure include the amine compounds that are listed as the preferred examples of the organic amine B1 and have an SP value of 9.5 (cal/cm³)^{1/2} or more and 14.0 (cal/cm³)^{1/2} or less from the viewpoint of reducing the direct current resistance of the power storage device, and also have a boiling point of 260°C or less. Among the amine compounds, the organic amine B2 is preferably at least one selected from the group consisting of 2-amino-2-methyl-1-propanol, 2-N-dibutylaminoethanol, 1-phenylmethanamine, 2-dimethylaminoethanol, N-methyl-2-aminoethanol, andN-ethyldiethanolamine, more preferably at least one selected from the group consisting of 2-dimethylaminoethanol, 2-amino-2-methyl-1-propanol, andN-methyl-2-aminoethanol, and particularly preferably 2-amino-2-methyl-1-propanol from the viewpoint of reducing the direct current resistance of the power storage device.

In one or more embodiments, the content of the organic amine B2 in the dispersant composition of the present disclosure is preferably 10 parts by mass or more, more preferably 20 parts by mass or more, even more preferably 30 parts by mass or more, still more preferably 50 parts by mass or more, and further preferably 70 parts by mass or more with respect to 100 parts by mass of the polymer A from the viewpoint of the effect of reducing the viscosities of the conductive material slurry and the positive electrode paste, and also from the viewpoint of reducing the direct current resistance of the power storage device. Furthermore, the content of the organic amine B2 is preferably 300 parts by mass or less, more preferably 250 parts by mass or less, even more preferably 200 parts by mass or less, and further preferably 150 parts by mass or less with respect to 100 parts by mass of the polymer A from the viewpoint of the solubility of the polymer A

The mass ratio A/B2 of the polymer A to the organic amine B2 in the dispersant composition of the present disclosure is preferably 0.1 or more, more preferably 0.3 or more, even more preferably 0.5 or more, and further preferably 0.8 or more from the viewpoint of improving the dispersibility of the conductive materials. Furthermore, the mass ratio AB2 is preferably 10 or less, more preferably 5 or less, and further preferably 3 or less from the viewpoint of high conductive properties.

### [Organic solvent]

In one or more embodiments, the dispersant composition of the present disclosure contains an organic solvent with a relative permittivity (εγ) of 25.0 or more and 35.0 or less at 25°C (also referred to as an "organic solvent C' for the sake of convenience in the following).

The relative permittivity (εγ) is an indicator of the polarity of a solvent and is expressed as a ratio (ε/ε₀) of the permittivity of a solvent (ε) to the permittivity of a vacuum (ε₀). The relative permittivity can be measured in accordance with ASTM-150 by using a commercially available measuring device such as Dielectric Constant Meter Model 871 manufactured by SANYO TRADING CO., LTD. For reference, the values of the relative permittivity are describedin, e.g., the "Handbook of Chemistry, Pure Chemistry, 5th ed" 2004, pp. 1-770 to 777.

The larger the relative permittivity (εγ), the higher the polarity of the solvent. The relative permittivity (εγ) of the organic solvent C is 25.0 or more, preferably 27.0 or more, and more preferably 29.0 or more at 25°C. Furthermore, the relative permittivity (εγ) of the organic solvent C is 35.0 or less, preferably 34.0 or less, and more preferably 33.0 or less at 25°C.

The organic solvent C is preferably an organic solvent that is able to dissolve a binder (binder resin) contained in the positive electrode paste. Examples of the organic solvent C include amide-based polar organic solvents such as N-methylpyrrolidone (NMP, εγ = 32.2). In particular, NMP with high solubility is preferred.

The dispersant composition of the present disclosure may further contain other components to the extent that they do not interfere with the effects of the present disclosure. The other components include, e.g., an antioxidant, a neutralizer, an antifoaming agent, an antiseptic, a dehydrating agent, an anticorrosive agent, a plasticizer, and a binder.

### <Carbon material-based conductive material slurry>

In one aspect, the present disclosure relates to a carbon material-based conductive material slurry (also referred to as a "conductive material slurry of the present disclosure" in the following). The conductive material slurry of the present disclosure contains carbon material-based conductive materials and the dispersant composition of the present disclosure. In this aspect, the preferred embodiments of the dispersant composition of the present disclosure are as described above. In one or more embodiments, the conductive material slurry of the present disclosure contains the polymer A, the organic solvent C, and the carbon material-based conductive materials (also referred to as "conductive materials D" in the following), as will be described below, and optionally an additional organic solvent or the organic amine B2. The additional organic solvent is preferably an organic solvent with a relative permittivity of 25.0 or more and 35.0 or less. The conductive material slurry of the present disclosure contains the dispersant composition of the present disclosure and therefore has a low viscosity. This also allows the carbon material-based conductive materials dispersed in the conductive material slurry to have a small particle size and good dispersibility.

### (Carbon material-based conductive material)

In one or more embodiments, examples of the carbon material-based conductive materials include carbon nanotubes (also referred to as "CNTs" in the following), carbon black, graphite, and graphene. Among them, the carbon material-based conductive materials are preferably at least one selected from carbon black or carbon nanotubes, and more preferably carbon nanotubes from the viewpoint of achieving high conductive properties. The carbon material-based conductive materials may be one type or a combination of two or more types.

### (CNT)

The average diameter of CNTs that can be used as the carbon material-based conductive materials is not particularly limited and is preferably 2 nm or more, more preferably 3 nm or more, and further preferably 5 nm or more from the viewpoint of improving the dispersibility of the CNTs. Furthermore, the average diameter of the CNTs is preferably 100 nm or less, more preferably 70 nm or less, and further preferably 50 nm or less from the viewpoint of improving the conductive properties. In the present disclosure, the average diameter of the CNTs may be measured with a scanning electron microscope (SEM) or an atomic force microscope (AFM).

The CNTs that can be used as the carbon material-based conductive materials may include two or more types with different diameters in order to achieve both the conductive properties and the dispersibility. When the CNTs are of two or more types with different diameters, the average diameter of the relatively thin CNTs is preferably 2 nm or more, more preferably 3 nm or more, and further preferably 5 nm or more from the viewpoint of the dispersibility. Furthermore, the average diameter of the relatively thin CNTs is preferably less than 30 nm, more preferably 25 nm or less, and further preferably 20 nm or less from the viewpoint of the conductive properties. On the other hand, the average diameter of the relatively thick CNTs is preferably 30 nm or more, more preferably 35 nm or more, and further preferably 40 nm or more from the viewpoint of the dispersibility. Furthermore, the average diameter of the relatively thick CNTs is preferably 100 nm or less, more preferably 70 nm or less, and further preferably 50 nm or less from the viewpoint of improving the conductive properties.

The average length of the CNTs may be measured with a scanning electron microscope (SEM) or an atomic force microscope (AFM). In the present disclosure, the average length of the CNTs is not particularly limited and is preferably 2 µm or more, more preferably 5 pm or more, even more preferably 10 µm or more, and further preferably 30 µm or more from the viewpoint of improving the conductive properties. Furthermore, the average length of the CNTs is preferably 500 µm or less, more preferably 300 µm or less, even more preferably 200 µm or less, and further preferably 120 µm or less from the viewpoint of improving the dispersibility.

The CNTs of the present disclosure mean the whole of a plurality of types of CNTs. The form of the CNTs used for the preparation of the conductive material slurry is not particularly limited For example, a plurality of types of CNTs may be present independently or may be bundled or entangled with each other. Alternatively, these forms of CNTs may be combined together. The CNTs may have various number of layers or various diameters. The CNTs may contain impurities (such as a catalyst and amorphous carbon) derived from the process of producing the CNTs.

The content of impurities in the CNTs may be measured by, e.g., thermogravimetric analysis. In the present disclosure, the content of impurities is preferably as small as possible. The content of impurities in the CNTs is preferably 40% by mass or less, more preferably 30% by mass or less, even more preferably 20% by mass or less, still more preferably 10% by mass or less, and further preferably substantially 0% by mass from the viewpoint of increasing the concentration of the effective CNTs.

In one or more embodiments, each of the CNTs that can be used as the carbon material-based conductive materials is a single sheet of graphite rolled into a cylinder. The CNTs include a single-walled carbon nanotube (SWCNT) consisting of a single layer of graphite, a double-walled carbon nanotube (DWCNT) consisting of two layers of graphite, and a multi-walled carbon nanotube (MWCNT) consisting of three or more layers of graphite. Any of the single-, double-, and multi-walled CNTs and a mixture of them can be used depending on the properties required for a positive electrode coating, which is formed by using the positive electrode paste for a power storage device that contains a CNT slurry. The positive electrode coating is a film-like layer obtained by applying the positive electrode paste to an electrode substrate (current collector).

Examples of the CNTs that can be used as the carbon material-based conductive materials include the following: NC-7000 (9.5 nm: hereinafter, the number in parentheses indicates the average diameter) and NX7100 (10 nm) manufactured by Nanocyl SA; FT6100 (9 nm), FT-6110 (9 nm), FT-6120 (9 nm), FT-7000 (9 nm), FT-7010 (9 nm), FT-7320 (9 nm), FT-9000 (12.5 nm), FT-9100 (12.5 nm), FT-9110 (12.5 nm), FT-9200 (19 nm), andFT-9220 (19 nm) manufactured by Jiangsu Cnano Technology Ltd.; HCNTs4 (4.5 nm), CNTs5 (7.5 nm), HCNTs5 (7.5 nm), GCNTs5 (7.5 nm), HCNTs10 (15 nm), CNTs20 (25 nm), and CNTs40 (40 nm) manufactured by Cabot Performance Materials (Shenzhen) Co., Ltd.; CTUBE 170 (13.5 nm), CTUBE 199 (8 nm), and CTUBE 298 (10 nm) manufactured by Korea CNT Co., Ltd.; K-Nanas 100P (11.5 nm) manufactured by Korea Kumho Petrochemical Co., Ltd.; CP-100 1M (12.5 nm) and BT-1003M (12.5 nm) manufactured by LG Chem; and 3003 (10 nm) and 3021 (20 nm) manufactured by Nano-Tech Port Co., Ltd.

Examples of the combination of two types of CNTs include the following: a combination of CNTs40 (40 nm) and HCNTs4 (4.5 nm) or HCNTs5 (7.5 nm) from Cabot Performance Materials (Shenzhen) Co., Ltd.; a combination of CNTs40 (40 nm) and GCNTs5 (7.5 nm) from Cabot Performance Materials (Shenzhen) Co., Ltd.; a combination of CNTs40 (40 nm) and FT-7010 (9 nm) from Jiangsu Cnano Technology Ltd.; a combination of CNTs40 (40 nm) and FT-9100 (12.5 nm) from Jiangsu Cnano Technology Ltd.; and a combination of CNTs40 (40 nm) and BT-1003M (12.5 nm) from LG Chem.

### (Carbon black)

Various types of carbon black, including furnace black, channel black, thermal black, acetylene black (AB), and Ketjen black, can be used as the carbon material-based conductive materials. In addition, common oxidized carbon black and hollow carbon can also be used. The oxidation of carbon is carried out in such a manner that carbon is treated at a high temperature in the air or secondarily treated with, e.g., nitric acid, nitrogen dioxide, or ozone, so that oxygen-containing polar functional groups such as phenol, quinone, carboxy, and carbonyl groups are directly introduced (covalently bonded) to the surface of the carbon. This treatment is typically performed to improve the dispersibility of carbon. However, in general, the larger the amount of the functional groups introduced, the lower the conductive properties of carbon. Therefore, carbon that has not been subjected to the oxidation treatment is preferably used

As the specific surface area of the carbon black that can be used as the carbon material-based conductive materials becomes larger, the points of contact between carbon black particles are increased, which is advantageous in reducing the internal resistance of an electrode. Specifically, the specific surface area (BET) is determined from the amount of nitrogen adsorption, and is preferably 20 m²/g or more and 1500 m²/g or less.

The primary particle size (diameter) of the carbon black that can be used as the carbon material-based conductive materials is preferably 5 nm or more and 1000 nm or less from the viewpoint of the conductive properties. In the present disclosure, the primary particle size of the carbon black is the average of the particle sizes measured with, e.g., an electron microscope.

Examples of the carbon black that can be used as the carbon material-based conductive materials include, but are not limited to, the following: TOKABLACK #4300, #4400, #4500, #5500, etc. (manufactured by TOKAI CARBON CO., LTD., furnace black); Printex L etc. (manufactured by Degussa AG, furnace black); Raven 7000, 5750, 5250, 5000 Ultra III, 5000 Ultra, etc. and Conductex SC Ultra, Conductex 975 Ultra, etc. (manufactured by Columbian Chemicals Co., furnace black); #2350, #2400B, #30050B, #3030B, #3230B, #3350B, #3400B, #5400B, etc. (manufactured by Mitsubishi Chemical Corporation, furnace black); MONARCH 1400, 1300, and 900, VULCAN XC-72R, BLACK PEARLS 2000, etc. (manufactured by Cabot Corporation, furnace black); ENSACO 250G, ENSACO 260G, ENSACO 350G, and SUPER P-Li (manufactured by TIMCAL Ltd); Ketjen black EC-300J and EC-600JD (manufactured by Akzo Co., Ltd); and DENKA BLACK, DENKA BLACK HS-100, FX-35, Li-100, Li-250, Li-400, and Li-435 (manufactured by Denka Company Limited, acetylene black).

### (Graphene)

The graphene that can be used as the carbon material-based conductive materials generally refers to a sheet of sp²-bonded carbon atoms with a thickness of one atom (ie., single-layer graphene). In the present disclosure, the graphene also includes a flaky substance having a layered structure of single-layer graphene sheets.

The thickness of the graphene that can be used as the carbon material-based conductive materials is not particularly limited and is preferably 100 nm or less, more preferably 50 nm or less, and further preferably 20 nm or less. The size of a graphene sheet in the direction parallel to the graphene layer is not particularly limited However, a conductive path per graphene becomes shorter when the graphene is too small. This may lead to poor conductive properties due to the influence of contact resistance between graphene sheets. Therefore, the graphene of the present disclosure is preferably larger than a certain degree. The size of a graphene sheet in the direction parallel to the graphene layer is preferably 0.5 µm or more, more preferably 0.7 µm or more, and further preferably 1 µm or more. In this case, the size of a graphene sheet in the direction parallel to the graphene layer means the average of the maximum diameter and the minimum diameter of the graphene sheet when observed in the direction perpendicular to the plane direction of the graphene sheet.

### (Content of carbon material-based conductive material in conductive material slurry)

The content of the carbon material-based conductive materials in the conductive material slurry of the present disclosure is preferably 0.1% by mass or more, more preferably 0.5% by mass or more, and further preferably 1% by mass or more from the viewpoint of improving the convenience of adjusting the concentration of the positive electrode paste. Furthermore, the content of the carbon material-based conductive materials is preferably 10% by mass or less, more preferably 8% by mass or less, and further preferably 5% by mass or less from the viewpoint of making the viscosity of the conductive material slurry suitable for easy handling.

### (Content of polymer Ain conductive material slurry)

The content of the polymer A in the conductive material slurry of the present disclosure is preferably 0.01% by mass or more, more preferably 0.05% by mass or more, even more preferably 0.08% by mass or more, and further preferably 0.15% by mass or more from the viewpoint of improving the dispersibility of the carbon material-based conductive materials. Furthermore, the content of the polymer A is preferably 2.0% by mass or less, more preferably 1.5% by mass or less, even more preferably 1.2% by mass or less, and further preferably 1.0% by mass or less from the viewpoint of high conductive properties.

The content of the polymer A (dispersant) in the conductive material slurry of the present disclosure is preferably 0.1 part by mass or more, more preferably 1 part by mass or more, even more preferably 5 parts by mass or more, and further preferably 10 parts by mass or more with respect to 100 parts by mass of the carbon material-based conductive materials from the viewpoint of improving the dispersibility of the carbon material-based conductive materials. Furthermore, the content of the polymer A is preferably 200 parts by mass or less, more preferably 150 parts by mass or less, even more preferably 90 parts by mass or less, and further preferably 75 parts by mass or less with respect to 100 parts by mass of the carbon material-based conductive materials from the viewpoint of high conductive properties.

### (Content of organic amine B2 in conductive material slurry)

The content of the organic amine B2 in the conductive material slurry of the present disclosure is preferably 0.01% by mass or more, more preferably 0.05% by mass or more, even more preferably 0.1% by mass or more, and further preferably 0.2% by mass or more from the viewpoint of improving the dispersibility of the carbon material-based conductive materials and reducing the resistance of the power storage device. Furthermore, the content of the organic amine B2 is preferably 2.0% by mass or less, more preferably 1.5% by mass or less, even more preferably 1.0% by mass or less, and further preferably 0.8% by mass or less from the viewpoint of high conductive properties.

The content of the organic amine B2 in the conductive material slurry of the present disclosure is preferably 1 part by mass or more, more preferably 5 parts by mass or more, even more preferably 10 parts by mass or more, and further preferably 15 parts by mass or more with respect to 100 parts by mass of the carbon material-based conductive materials from the viewpoint of improving the dispersibility of the carbon material-based conductive materials and reducing the resistance of the power storage device. Furthermore, the content of the organic amine B2 is preferably 200 parts by mass or less, more preferably 100 parts by mass or less, and further preferably 50 parts by mass or less with respect to 100 parts by mass of the carbon material-based conductive materials from the viewpoint of high conductive properties.

### (Production method of conductive material slurry)

In one or more embodiments, the conductive material slurry of the present disclosure may be prepared by mixing a mixture of the dispersant composition of the present disclosure and the carbon material-based conductive materials, and optionally an additional organic solvent or the organic amine B2, with a mixing and dispersing machine. The additional organic solvent is preferably an organic solvent with a relative permittivity of 25.0 or more and 35.0 or less at 25°C and may be the same as the organic solvent C that is used for the preparation of the dispersant composition of the present disclosure, as described above.

The mixing and dispersing machine may be at least one selected from, e.g., an ultrasonic homogenizer, a vibration mill, a jet mill, a ball mill, a bead mill, a sand mill, a roll mill, a homogenizer, a high-pressure homogenizer, an ultrasonic device, an attritor, a dissolver, or a paint shaker. Some of the components of the conductive material slurry may be mixed first, and then the mixture may be blended with the remainder. Moreover, all the components of the conductive material slurry do not have to be added at once, but may be divided and added multiple times. The carbon material-based conductive materials may be in a dry state or in a dispersed state in a solvent. This solvent may be the same as the organic solvent C described above.

### <Positive electrode paste for power storage device>

In one aspect, the present disclosure relates to a positive electrode paste for a power storage device (also referred to as a "positive electrode paste of the present disclosure" in the following). The positive electrode paste of the present disclosure contains the dispersant composition of the present disclosure, a positive electrode active material, and carbon material-based conductive materials. In this aspect, the preferred embodiments of the dispersant composition of the present disclosure are as described above. In one or more embodiments, the positive electrode paste of the present disclosure contains the polymer A, the organic solvent C, the carbon material-based conductive materials, and the positive electrode active material, and optionally an additional organic solvent or the organic amine B2.

The positive electrode paste of the present disclosure contains the dispersant composition of the present disclosure and therefore enables the formation of a positive electrode coating with a low resistance value.

In one or more embodiments, the positive electrode paste of the present disclosure may further contain a binder.

In one or more embodiments, the positive electrode paste of the present disclosure may further contain conductive materials other than the carbon material-based conductive materials. The conductive materials other than the carbon material-based conductive materials include, e.g., conductive polymers such as polyaniline. Moreover, the positive electrode paste of the present disclosure contains an additional organic solvent as needed

### (Positive electrode active material)

The positive electrode active material may be any inorganic compound such as a compound with an olivine structure or a lithium transition metal composite oxide. Examples of the compound with an olivine structure include compounds represented by the general formula LiₓM1ₛPO₄ (where M1 represents a 3d transition metal, 0 ≤ x ≤ 2, and 0.8 ≤ s ≤ 1.2). The compound with an olivine structure may be coated with, e.g., amorphous carbon. Examples of the lithium transition metal composite oxide include a lithium manganese oxide with a spinel structure and a lithium transition metal composite oxide that has a layered structure and is represented by the general formula LiₓMO_{2-δ} (where M represents a transition metal, 0.4 ≤ x ≤ 1.2, and 0 ≤ δ ≤ 0.5). The transition metal M may be, e.g., Co, Ni, or Mn. The lithium transition metal composite oxide may further contain one or more than one element selected from Al, Mn, Fe, Ni, Co, Cr, Ti, Zn, P, or B.

The content of the positive electrode active material in the positive electrode paste of the present disclosure is not particularly limited as long as it can be adjusted in accordance with a suitable viscosity of the positive electrode paste that is applied to a current collector. The content of the positive electrode active material is preferably 40% by mass or more, more preferably 50% by mass or more, and further preferably 60% by mass or more from the viewpoint of energy density and the stability of the positive electrode paste. From the same viewpoint, the content of the positive electrode active material is preferably 90% by mass or less, more preferably 85% by mass or less, and further preferably 80% by mass or less.

The content of the positive electrode active material in the total solid content of the positive electrode paste of the present disclosure is not particularly limited and may be the same as that of a positive electrode active material in the total solid content of a conventionally known positive electrode paste. The content of the positive electrode active material in the total solid content of the positive electrode paste of the present disclosure is preferably 90.0% by mass or more in order to maintain the energy density of the power storage device at a high level, and is also preferably 99.9% by mass or less in order to ensure the conductive properties and coating properties of a composite layer.

### (Binder)

The binder (binder resin) may be, e.g., polyvinylidene fluoride (PVDF), a vinylidene fluoride-hexafluoropropylene copolymer, styrene-butadiene rubber, or polyacrylonitrile. These materials may be used alone or in combination of two or more.

The content of the binder in the total solid content of the positive electrode paste of the present disclosure is preferably 0.05% by mass or more from the viewpoint of the coating properties of the composite layer and the binding properties of the composite layer to a current collector. Furthermore, the content of the binder is preferably 9.95% by mass or less from the viewpoint of maintaining the energy density of the power storage device at a high level.

### (Content of polymer Ain positive electrode paste)

The content of the polymer A in the positive electrode paste of the present disclosure is preferably 0.01% by mass or more, and more preferably 0.02% by mass or more from the viewpoint of coating resistance. From the same viewpoint, the content of the polymer A is preferably 2.0% by mass or less, and more preferably 1.0% by mass or less.

### (Content of organic amine B2 in positive electrode paste)

The content of the organic amine B2 in the positive electrode paste of the present disclosure is preferably 0.002% by mass or more, more preferably 0.012% by mass or more, and further preferably 0.02% by mass or more from the viewpoint of increasing the solid content concentration of the positive electrode paste and reducing the viscosity of the positive electrode paste. Furthermore, the content of the organic amine B2 is preferably 0.2% by mass or less, more preferably 0.1% by mass or less, and further preferably 0.05% by mass or less from the viewpoint of solubility in the solvent and the stability of the positive electrode paste.

### (Content of carbon material-based conductive material in positive electrode paste)

The content of the carbon material-based conductive materials in the positive electrode paste of the present disclosure is preferably 0.01% by mass or more, more preferably 0.05% by mass or more, and further preferably 0.1% by mass or more from the viewpoint of the conducive properties of the composite layer. Furthermore, the content of the carbon material-based conductive materials is preferably 5% by mass or less, more preferably 3% by mass or less, and further preferably 2% by mass or less from the viewpoint of maintaining the energy density of the power storage device at a high level.

In one or more embodiments, the positive electrode paste of the present disclosure may be prepared by mixing the positive electrode active material, the conductive material slurry of the present disclosure, the binder, and an organic solvent (additional solvent) for adjusting the solid content or the like, and then stirring the mixture. In addition, the mixture may further contain a dispersant other than the polymer A or a functional material. The organic solvent (additional solvent) is preferably an organic solvent with a relative permittivity of 25.0 or more and 35.0 or less at 25°C and may be the same as the organic solvent C that is used for the preparation of the dispersant composition of the present disclosure, as described above. In the preparation of the positive electrode paste of the present disclosure, the organic solvent (additional solvent) is preferably a non-aqueous solvent, and more preferably NMP. The mixing and stirring processes can be performed using, e.g., a planetary mixer, a bead mill, or a jet mill either alone or in combination.

The positive electrode paste of the present disclosure may also be prepared by premixing some of the components that are used to prepare the positive electrode paste, and then blending the mixture with the remainder. Moreover, all the components of the positive electrode paste do not have to be added at once, but may be divided and added multiple times. This can reduce the mechanical load on the stirring device.

The solid content concentration of the positive electrode paste of the present disclosure, the amount of the positive electrode active material, the amount of the binder, the amount of the conductive material slurry, the amount of the additive components, and the amount of the organic solvent can be adjusted in accordance with a suitable viscosity of the positive electrode paste that is applied to a current collector. The amount of the organic solvent is preferably as small as possible in terms of drying properties. However, the viscosity of the positive electrode paste should not be too high from the viewpoint of the uniformity and surface smoothness of a positive electrode composite layer. On the other hand, the viscosity of the positive electrode paste should not be too low from the viewpoint of preventing drying and ensuring a sufficient thickness of the composite layer (positive electrode coating).

It is preferable that the positive electrode paste of the present disclosure can be adjusted to a high concentration from the viewpoint of production efficiency. However, a significant increase in the viscosity of the positive electrode paste is not preferred in terms of workability. The use of additives can maintain a suitable viscosity range while keeping a high concentration of the positive electrode paste.

Each of the conductive material slurry and the positive electrode paste of the present disclosure may further contain other components to the extent that they do not interfere with the effects of the present disclosure. The other components include, e.g., an antioxidant, a neutralizer, an antifoaming agent, an antiseptic, a dehydrating agent, an anticorrosive agent, a plasticizer, and a binder.

### (Production method of positive electrode paste)

In one or more embodiments, a method for producing a positive electrode paste of the present disclosure may include mixing the carbon material-based conductive material slurry of the present disclosure, the binder, and the positive electrode active material, and optionally an additional organic solvent or the organic amine B2. In one or more embodiments, the method may further include mixing an additional dispersant composition of the present disclosure and additional carbon material-based conductive materials, if necessary. These components may be mixed in any order. In one or more embodiments, the positive electrode paste may also be produced in the following manner. The conductive material slurry of the present disclosure, the additional organic solvent, and the binder are mixed and dispersed until the mixture becomes homogeneous. Then, this mixture is blended with the positive electrode active material and stirred until it becomes homogeneous. The order of adding the components is not limited to the above.

### <Production method of positive electrode coating or positive electrode for power storage device>

In one aspect, the present disclosure relates to a method for producing a positive electrode coating or a positive electrode for a power storage device by using the positive electrode paste of the present disclosure. The method in this aspect includes applying the positive electrode paste of the present disclosure to a current collector, and then drying and pressing the applied positive electrode paste. In this aspect, the preferred embodiments of the positive electrode paste of the present disclosure are as described above. In the production method of the present disclosure, the positive electrode coating or the positive electrode for a power storage device can be produced by a conventionally known method except for the use of the positive electrode paste of the present disclosure.

The positive electrode coating or the positive electrode for a power storage device may be produced by, e.g., applying the positive electrode paste to a current collector such as aluminum foil, and then drying the positive electrode paste. The applied positive electrode paste may also be subjected to compaction with a pressing machine to increase the density of the positive electrode coating. The positive electrode paste may be applied with, e.g., a die head, a comma reverse roll, a direct roll, or a gravure roll The applied positive electrode paste may be dried by, e.g., heating, airflow, or infrared radiation, which may be used alone or in combination. The drying is performed at a temperature at which the organic solvent in the positive electrode paste evaporates and cannot be present in the positive electrode paste as the drying time passes. The drying temperature is not particularly limited as long as it is equal to or lower than the thermal decomposition temperature of the binder resin in the environment (under atmospheric pressure or vacuum) in which the drying is performed The drying temperature is preferably equal to or higher than the boiling point of the organic solvent. Specifically, the drying temperature is preferably 60°C or more and 220°C or less, and the drying time is preferably 10 minutes or more and 24 hours or less. The positive electrode can be pressed with, e.g., a roll press machine. After pressing the positive electrode, it may be processed to a size suitable for fitting into a power storage device, and then dried again under the conditions described above.

### <Power storage device and production method thereof>

In one aspect, the present disclosure relates to a power storage device that includes a positive electrode obtained by the production method of a positive electrode for a power storage device of the present disclosure, and also relates to a method for producing the power storage device.

In one or more embodiments, examples of the power storage device include a lithium ion secondary battery, a lithium-air secondary battery, a sodium ion battery, a sodium-sulfur secondary battery, a sodium-nickel chloride secondary battery, an organic radical battery, a zinc-air secondary battery, and an all-solid-state battery.

The production method of a power storage device of the present disclosure includes the same steps as those of a known production method of a power storage device except for the use of the positive electrode of the present disclosure. For example, the production method of the present disclosure includes the following steps: stacking two electrodes (positive electrode and negative electrode) via a separator to form a layered body and winding the layered body or laminating two or more layered bodies according to the shape of a battery; and placing the wound electrode body or the laminated electrode body thus obtained in a battery container or a laminated container, putting an electrolyte solution into the container, and sealing the container.

The present disclosure further discloses a dispersant composition for an electrode of a power storage device, a carbon material-based conductive material slurry, a positive electrode paste for a power storage device, and a method for producing a positive electrode for a power storage device as follows.
<1> A dispersant composition for an electrode of a power storage device, comprising: a polymer A containing a repeating unit represented by the following general formula (1); and an organic solvent, wherein the organic solvent has a relative permittivity of 25.0 or more and 35.0 or less at 25°C: 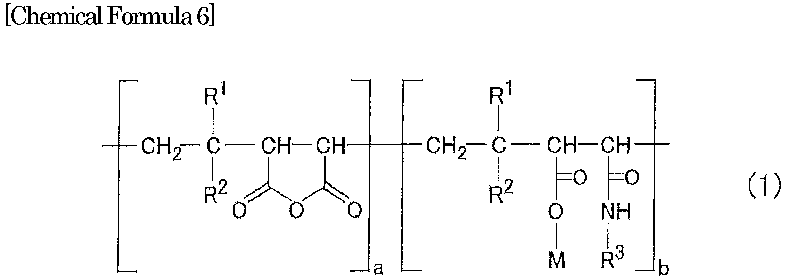 in the general formula (1), R¹ represents hydrogen or a methyl group,
   R² represents hydrogen, CₙH₂ₙ₊₁, i-CₙH₂ₙ₊₁, C₆H₅, or an aromatic group with or without a substituent, and n represents 1 or more and 10 or less,
   R³ represents CₘH₂ₘ₊₁ or i-CₘH₂ₘ₊₁, and m represents 16 or more and 22 or less,
   M represents hydrogen, NH₄, a metal that gives a salt soluble in the organic solvent, or organic ammonium soluble in the organic solvent, and
   a and b each represent a mole fraction, provided that a + b = 1, and b satisfies 0.50 ≤ b ≤ 1.00.
<2> A dispersant composition for an electrode of a power storage device, comprising: a polymer A containing a repeating unit represented by the following general formula (1); and an organic solvent, wherein the organic solvent has a relative permittivity of 25.0 or more and 35.0 or less at 25°C: 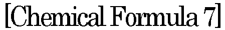 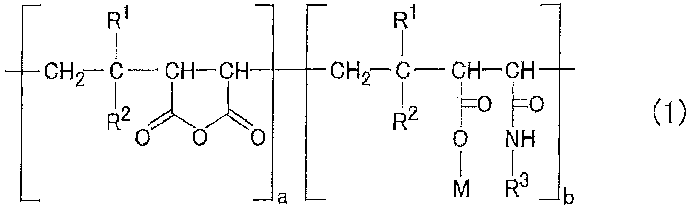 in the general formula (1), R¹ represents hydrogen or a methyl group,
   R² represents hydrogen, CₙH₂ₙ₊₁, i-CₙH₂ₙ₊₁, or a naphthyl or phenyl group with or without a substituent, and n represents 1 or more and 7 or less,
   R³ represents CₘH₂ₘ₊₁ or i-CₘH₂ₘ₊₁, and m represents 16 or more and 22 or less,
   M represents hydrogen, NH₄, a metal that gives a salt soluble in the organic solvent, or organic ammonium soluble in the organic solvent, and
   a and b each represent a mole fraction, provided that a + b = 1, and b satisfies 0.50 ≤ b ≤ 1.00.
<3> A dispersant composition for an electrode of a power storage device, comprising: a polymer A containing a repeating unit represented by the following general formula (1); and an organic solvent, wherein the organic solvent has a relative permittivity of 25.0 or more and 35.0 or less at 25°C: 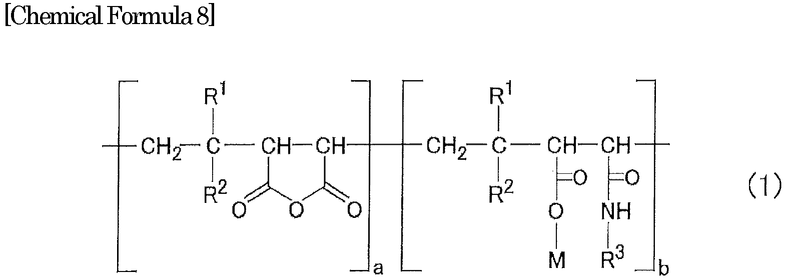 in the general formula (1), R¹ represents a methyl group,
   R² represents CₙH₂ₙ₊₁, i-CₙH₂ₙ₊₁, or a naphthyl or phenyl group with or without a substituent, and n represents 1 or more and 7 or less,
   R³ represents CₘH₂ₘ₊₁ or i-CₘH₂ₘ₊₁, and m represents 16 or more and 22 or less,
   M represents hydrogen, NH₄, a metal that gives a salt soluble in the organic solvent, or organic ammonium soluble in the organic solvent, and
   a and b each represent a mole fraction, provided that a + b = 1, and b satisfies 0.50 ≤ b ≤ 1.00.
<4> A dispersant composition for an electrode of a power storage device, comprising: a polymer A containing a repeating unit represented by the following general formula (1); and an organic solvent, wherein the organic solvent has a relative permittivity of 25.0 or more and 35.0 or less at 25°C: 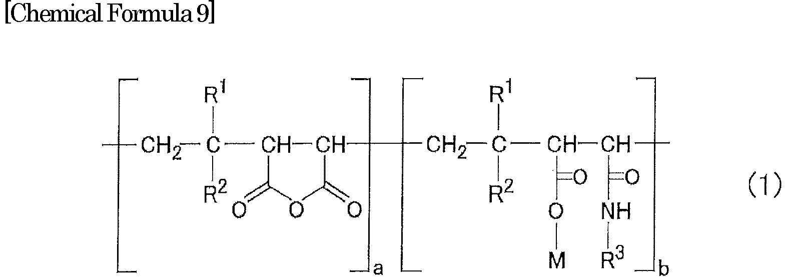 in the general formula (1), R¹ represents a methyl group,
   R² represents CₙH₂ₙ₊₁ or i-CₙH₂ₙ₊₁, and n represents 1 or more and 7 or less,
   R³ represents CₘH₂ₘ₊₁ or i-CₘH₂ₘ₊₁, and m represents 16 or more and 22 or less,
   M represents hydrogen, and
   a and b each represent a mole fraction, provided that a + b = 1, and b satisfies 0.50 ≤ b ≤ 1.00.
<5> A dispersant composition for an electrode of a power storage device, comprising: a polymer A containing a repeating unit represented by the following general formula (1); an organic solvent; and an organic amine B2 soluble in the organic solvent, wherein the organic solvent has a relative permittivity of 25.0 or more and 35.0 or less at 25°C, and the organic amine B2 is at least one selected from the group consisting of 2-amino-2-methyl-1-propanol, 2-N-dibutylaminoethanol, 1-phenylmethanamine, 2-dimethylaminoethanol, N-methyl-2-aminoethanol, and N-ethylchethanolamine: 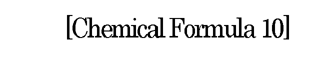 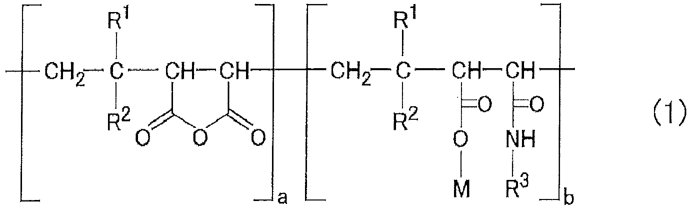 in the general formula (1), R¹ represents a methyl group,
   R² represents CₙH₂ₙ₊₁, i-CₙH₂ₙ₊₁, or a naphthyl or phenyl group with or without a substituent, and n represents 1 or more and 7 or less,
   R³ represents CₘH₂ₘ₊₁ or i-CₘH₂ₘ₊₁, and m represents 16 or more and 22 or less,
   M represents hydrogen, NH₄, a metal that gives a salt soluble in the organic solvent, or organic ammonium soluble in the organic solvent, and
   a and b each represent a mole fraction, provided that a + b = 1, and b satisfies 0.50 ≤ b ≤ 1.00.
<6> The dispersant composition according to any one of <1> to <5>, wherein a content of the polymer Ais 0.1% by mass or more and 40% by mass or less.
<7> The dispersant composition according to any one of <1> to <6>, wherein a mass ratio AB2 of the polymer A to the organic amine B2 is 0.5 or more and 5 or less.
<8> A carbon material-based conductive material slurry comprising: the dispersant composition according to any one of <1> to <7>; and carbon material-based conductive materials, wherein an organic solvent contained in the carbon material-based conductive material slurry has a relative permittivity of 25.0 or more and 35.0 or less at 25°C.
<9> The carbon material-based conductive material slurry according to <8>, wherein a content of the polymer Ais 0.1 part by mass or more and 200 parts by mass or less with respect to 100 parts by mass of the carbon material-based conductive materials.
<10> The carbon material-based conductive material slurry according to <8> or <9>, wherein a content of the organic amine B2 is 1 part by mass or more and 200 parts by mass or less with respect to 100 parts by mass of the carbon material-based conductive materials.
<11> A positive electrode paste for a power storage device, comprising: the dispersant composition according to any one of <1> to <7>; a positive electrode active material; and carbon material-based conductive materials, wherein an organic solvent contained in the positive electrode paste has a relative permittivity of 25.0 or more and 35.0 or less at 25°C.
<12> A method for producing a positive electrode for a power storage device by using the positive electrode paste according to <11>.
<13> A method for producing a power storage device by using a positive electrode for a power storage device that is produced by the method according to <12>.
<14> Use of the dispersant composition according to any one of <1> to <7> for production of a carbon material-based conductive material slurry.
<15> Use of the dispersant composition according to any one of <1> to <7> for production of a positive electrode paste for a power storage device.

### Examples

Hereinafter, Examples of the present disclosure and Comparative Examples will be described, but the present disclosure is not limited to the following examples.

### 1. Measurement method of each parameter

### [Measurement of weight average molecular weight]

The weight average molecular weight of a copolymer before amidation was measured by a GPC method. The detailed conditions are as follows.
Measuring device: HLC-8320 GPC (manufactured by Tosoh Corporation)
Column: α - M + a - M (manufactured by Tosoh Corporation)
Column temperature: 40°C
Detector: differential refractometer
Eluent: N,N-dimethylformamide (DMF) solution containing 60 mmol/L of H₃PO₄ and 50 mmol/L of LiBr
Flow rate: 1 mL/min
Standard sample used for calibration curve: polystyrene
Sample solution: DMF solution containing 0.5 wt% of solid content of copolymer
Amount of sample solution injected: 100 pL

### [Measurement of viscosity of conductive material slurry]

The viscosity (25°C) of the conductive material slurry was measured in the following manner. Using a rheometer MCR 302 (manufactured by Anton Paar GmbH) equipped with a parallel plate PP50, the shear rate was increased from 0.1 s⁻¹ to 1000 s⁻¹ (forward sweep) and then returned from 1000 s⁻¹ to 0.1 s⁻¹ (backward sweep), and the viscosity at a shear rate of 1 s⁻¹ in the backward sweep was determined Table 2 shows the results.

### [Measurement of particle size of dispersed CNT]

The conductive material slurry diluted about 50 times with NMP was placed in a glass cell, and the particle size of the dispersed CNTs was measured at 25°C with a particle size analyzer "Zetasizer Nano-S" (manufactured by Malvern Panalytical Ltd.). Table 2 shows the results.

### [Measurement of resistance value of positive electrode coating)

The positive electrode paste was dropped on a polyester film and applied uniformly to the polyester film with a 100 µm applicator. The coated polyester film was dried at 80°C for 1 hour. Thus, a positive electrode coating with a thickness of 40 µm was provided.

The coating resistance value of the positive electrode coating was measured at a limiting voltage of 10 V by using Loresta-GP (manufactured by Mitsubishi Chemical Analytech Co., Ltd.) equipped with a PSP probe. Table 3 shows the results.

### [Measurement of direct current resistance (DCR)]

A power storage device was produced by the following procedure to measure direct current resistance.

The positive electrode paste was applied to a piece of Al foil (current collector) with a thickness of 20 µm so that the positive electrode capacity was 3 mAh/cm². Then, the positive electrode paste was vacuum dried at 100°C for 12 hours with a vacuum dryer, resulting in an electrode material (positive electrode material) that included a current collector and a composite layer disposed on the current collector. This positive electrode material was punched to a diameter of 13 mm and pressed to form an electrode (positive electrode). Next, a separator with a diameter of 19 mm and coin-shaped metallic lithium with a diameter of 15 mm and a thickness of 0.5 mm were placed on the positive electrode. Thus, a 2032 type coin cell (test half-cell) was produced. The electrolyte solution was 1MLiPF₆ in EC/DEC (volume ratio = 317).

A 3-cycle charge-discharge test was performed on the test half cells thus produced under the following charge-discharge conditions, where the temperature of each cell was controlled at 30°C in a thermostat.

### (Charge-discharge conditions)

### 30°C, 0.2 C, charge 4.45 V CC/CV 1/10 C cutoff discharge CC 3.0 V cutoff

Next, each of the test half-cells was charged at 0.2 C for 2.5 hours, and then direct current resistance (DCR) was calculated from a voltage drop for 10 seconds when the cell was discharged at 0.2 to 8 C. Table 5 shows the results.

### 2. Preparation of dispersant composition

### (Example 1-1)

In a 1L four-necked separable glass flask were placed 88.0 g of a styrene/maleic anhydride copolymer (manufactured by Polyscope Polymers, XIRAN (registered trademark) 1000, weight average molecular weight: 5000) and 276.2 g of methyl isobutyl ketone (MIBK) (manufactured by FUJIFILM Wako Pure Chemical Corporation), and this solution was stirred for a predetermined time (0.5 hour) in a nitrogen atmosphere. Next, 112.0 g of stearylamine (manufactured by FUJIFILM Wako Pure Chemical Corporation) was added to the flask at room temperature, and then the temperature of the reaction solution in the flask was increased to about 72°C and held for 2 hours. Thus, a polymer solution was obtained. The solvent was allowed to evaporate from the polymer solution, thereby providing a dispersant A-1. The dispersant A-1 was mixed with N-methyl-2-pyrrolidone (NMP), so that a dispersant composition in Example 1-1 was prepared in which the content of the dispersant A-1 was 20.0% by mass. The dispersant A-1 andN-methyl-2-pyrrolidone (NMP) were mixed by stirring them at 50°C for 5 hours with a rotational speed of 200 rpm.

### (Example 1-2)

A glass reaction vessel equipped with an agitator, a thermometer, a reflux condenser, a nitrogen introduction tube, and a dropping funnel was used The reaction vessel was charged with 621.8 g of diisobutylene (manufactured by Maruzen Petrochemical Co., Ltd.) and 3.1 g of Lutonal A-50 (manufactured by BASF, polyvinyl ethyl ether). The inside of the reaction vessel was filled with a nitrogen atmosphere, and stirring was started. The contents in the reaction vessel were heated to 105°C and maintained at this temperature until the polymerization reaction was completed. Then, 190.0 g of liquid maleic anhydride (manufactured by MITSUI CHEMICALS POLYURETHANES, INC) which was kept warm at 70°C, and an initiator solution in which 9.2 g of PERBUTYL O (manufactured by NOF CORPORATION, polymerization initiator, t-butyl peroxy-2-ethylhexanoate, "PERBUTYL" (registered trademark)) was dissolved in 23.1 g of diisobutylene were added dropwise from different dropping funnels to the reaction vessel over 4 hours. After 20 minutes from the end of the dropping, 1.2 g of PERBUTYL O dissolved in 7.3 g of diisobutylene was added to the reaction vessel, and the mixture was further aged for 2 hours and 40 minutes to complete the polymerization reaction, resulting in a solution containing the copolymer. Subsequently, 800 g of ion-exchanged water was added to the reaction vessel so that the copolymer precipitated out of the solution. Next, unreacted diisobutylene was distilled off by steam distillation, where the reaction vessel was heated under normal pressure, and the temperature of the contents in the reaction vessel reached 100°C. The steam distillation was continued until no more distillate of diisobutylene was collected. Next, water was removed by decantation, and then the copolymer precipitates wetted with water were dried at 105°C for 24 hours under a reduced pressure of 100 mmHg. Thus, a diisobutylene/maleic anhydride copolymer a with a weight average molecular weight of 28000 was obtained

In a 1 L four-necked separable glass flask were placed 88.0 g of the diisobutylene/maleic anhydride copolymer a (weight average molecular weight: 28000) thus obtained and 276.2 g of methyl isobutyl ketone (MIBK) (manufactured by FUJIFILM Wako Pure Chemical Corporation), and this solution was stirred for a predetermined time (0.5 hour) in a nitrogen atmosphere. Next, 112.0 g of stearylamine (manufactured by FUJIFILM Wako Pure Chemical Corporation) was added to the flask at room temperature, and then the temperature of the reaction solution in the flask was increased to about 72°C and held for 2 hours. Thus, a polymer solution with a non-volatile content of 40% by mass was obtained. The solvent was allowed to evaporate from the polymer solution, thereby providing a dispersant A-2. The dispersant A-2 was mixed with N-methyl-2 -pyrrolidone (NMP), so that a dispersant composition in Example 1-2 was prepared in which the content of the dispersant A-2 was 20.0% by mass. The dispersant A-2 andN-methyl-2-pyrrolidone (NMP) were mixed by stirring them at 50°C for 5 hours with a rotational speed of 200 rpm.

### (Examples 1-3 to 1-7, Comparative Example 1-1)

Dispersants A-3 to A-8 shown in Table 1 were synthesized by changing the type, amount, or the like of the amine compound used for the synthesis of a dispersant. Then, dispersant compositions in Examples 1-3 to 1-7 and Comparative Example 1-1 shown in Table 1 were prepared in the same manner as the dispersant composition in Example 1-2.

### (Example 1-8)

A diisobutylene/maleic anhydride copolymer b with a weight average molecular weight of 9000 was obtained by performing the same operation as that in the synthesis of the copolymer a, except that 15.3 g of PERBUTYL O (manufactured by NOF CORPORATION, polymerization initiator, t-butyl peroxy-2-ethylhexanoate) was dissolved in 23.1 g of diisobutylene (manufactured by Maruzen Petrochemical Co., Ltd.) as an initiator solution.

A dispersant A-9 and a dispersant composition in Example 1-8 were prepared by performing the same operation as that in Example 1-2, except that the diisobutylene/maleic anhydride copolymer b (weight average molecular weight: 9000) thus obtained was used instead of the copolymer a in Example 1-2.

### (Example 1-9)

A diisobutylene/maleic anhydride copolymer c with a weight average molecular weight of 6000 was obtained by performing the same operation as that in the synthesis of the copolymer a, except that 17.4 g of PERBUTYL O (manufactured by NOF CORPORATION, polymerization initiator, t-butyl peroxy-2-ethylhexanoate) was dissolved in 23.1 g of diisobutylene (manufactured by Maruzen Petrochemical Co., Ltd.) as an initiator solution.

A dispersant A-10 and a dispersant composition in Example 1-9 were prepared by performing the same operation as that in Example 1-2, except that the diisobutylene/maleic anhydride copolymer c (weight average molecular weight: 6000) thus obtained was used instead of the copolymer a in Example 1-2.

### (Example 1-10)

In a 1 L four-necked separable glass flask were placed 54.59 g of ISOBAM 04 (manufactured by Kuraray Co., Ltd., isobutylene/maleic anhydride copolymer, weight average molecular weight: 60000) and 350.00 of tetrahydrofuran (THF) (manufactured by FUJIFILM Wako Pure Chemical Corporation), and this solution was stirred for a predetermined time (0.5 hour) in a nitrogen atmosphere. Next, 95.41 g of stearylamine (manufactured by FUJIFILM Wako Pure Chemical Corporation) was added to the flask at room temperature, and then the temperature of the reaction solution in the flask was increased to about 50°C and held for 2 hours. Thus, a polymer solution was obtained. The solvent was allowed to evaporate from the polymer solution, thereby providing a dispersant A-11. The dispersant A-11 was mixed with N-methyl-2-pyrrolidone (NMP), so that a dispersant composition in Example 1-10 was prepared in which the content of the dispersant A-11 was 0.5% by mass. The dispersant A-11 and N-methyl-2-pyrrolidone (NMP) were mixed by stirring them at 50°C for 5 hours with a rotational speed of 200 rpm.

### (Example 1-11)

In this example, 20.0 parts by mass of the dispersant A-2, 3.7 parts by mass of 2-amino-2-methyl-1-propanol (organic amine B2) for neutralizing the dispersant A-2, and 76.3 parts by mass of N-methyl-2-pyrrolidone (NMP) were mixed and stirred at 50°C for 5 hours with a rotational speed of 200 rpm, so that a dispersant composition in Example 1-11 was prepared

### (Example 1-12)

In this example, 20.0 parts by mass of the dispersant A-2, 10.0 parts by mass of 2-amino-2-methyl-1-propanol (organic amine B2), and 70.0 parts by mass of N-methyl-2-pyrrolidone (NMP) were mixed and stirred at 50°C for 5 hours with a rotational speed of 200 rpm, so that a dispersant composition in Example 1-12 was prepared

### (Example 1-13)

In this example, 20.0 parts by mass of the dispersant A-2, 20.0 parts by mass of 2-amino-2-methyl-1-propanol (organic amine B2), and 60.0 parts by mass of N-methyl-2-pyrrolidone (NMP) were mixed and stirred at 50°C for 5 hours with a rotational speed of 200 rpm, so that a dispersant composition in Example 1-13 was prepared

### (Examples 1-14 to 1-18)

Dispersant compositions in Examples 1-14 to 1-18 were prepared in the same manner as the dispersant composition in Example 1-13, except that 2-amino-2-methyl-1-propanol (organic amine B2) was changed to the organic amine B2 shown in Table 1.

### (Comparative Example 1-2)

A dispersant composition in Comparative Example 1-2 was prepared in the same manner as the dispersant composition in Example 1-2, except that NMP was changed to toluene.

### (Comparative Example 1-3)

A dispersant composition in Comparative Example 1-3 was prepared in the same manner as the dispersant composition in Example 1-2, except that NMP was changed to dimethylformamide.

### (Comparative Example 1-4)

A dispersant composition in Comparative Example 1-4 was prepared in the same manner as the dispersant composition in Example 1-2, except that NMP was changed to 2-propanol.

### (Comparative Example 1-5)

A dispersant composition in Comparative Example 1-5 was prepared in the same manner as the dispersant composition in Example 1-2, except that NMP was changed to ethanol

**[TABLE 1]**

| Table 1 | Dispersant composition | | | | | | | | | | | | | | |
|---|---|---|---|---|---|---|---|---|---|---|---|---|---|---|---|
| | Dispersant | | | | | | | | Organic amine B2 | | | | Organic solvent | | |
| | Type | R¹ | R² | R³ | M | b | Mw | Mass (%)¹⁾ | Type | SP value²⁾ | Boiling point (°C) | Mass (%)¹⁾ | Type | Relative permittivity | Mass (%)¹⁾ |
| Ex. 1-1 | A-1 | H | C₆H₅ | C₁₈H₃₇ | H | 1.00 | 5000 | 20.0 | - | - | - | 0 | NMP | 32.2 | 80.0 |
| Ex. 1-2 | A-2 | CH₃ | i-C₅H₁₁ | C₁₈H₃₇ | H | 1.00 | 28000 | 20.0 | - | - | - | 0 | NMP | 32.2 | 80.0 |
| Ex. 1-3 | A-3 | CH₃ | i-C₅H₁₁ | C₁₈H₃₇ | H | 0.70 | 28000 | 20.0 | - | - | - | 0 | NMP | 32.2 | 80.0 |
| Ex. 1-4 | A-4 | CH₃ | i-C₅H₁₁ | C₁₈H₃₇ | H | 0.50 | 28000 | 20.0 | - | - | - | 0 | NMP | 32.2 | 80.0 |
| Ex. 1-5 | A-5 | CH₃ | i-C₅H₁₁ | C₁₆H₃₃ | H | 1.00 | 28000 | 20.0 | - | - | - | 0 | NMP | 32.2 | 80.0 |
| Ex. 1-6 | A-6 | CH₃ | i-C₅H₁₁ | C₂₂H₄₅ | H | 1.00 | 28000 | 20.0 | - | - | - | 0 | NMP | 32.2 | 80.0 |
| Ex. 1-7 | A-7 | CH₃ | i-C₅H₁₁ | C₂₂H₄₅ | H | 0.50 | 28000 | 20.0 | - | - | - | 0 | NMP | 32.2 | 80.0 |
| Ex. 1-8 | A-9 | CH₃ | i-C₅H₁₁ | C₁₈H₃₇ | H | 1.00 | 9000 | 20.0 | - | - | - | 0 | NMP | 32.2 | 80.0 |
| Ex. 1-9 | A-10 | CH₃ | i-C₅H₁₁ | C₁₈H₃₇ | H | 1.00 | 6000 | 20.0 | - | - | - | 0 | NMP | 32.2 | 80.0 |
| Ex. 1-10 | A-11 | CH₃ | CH₃ | C₁₈H₃₇ | H | 1.00 | 60000 | 0.5 | - | - | - | 0 | NMP | 32.2 | 99.5 |
| Ex. 1-11 | A-2 | CH₃ | i-C₅H₁₁ | C₁₈H₃₇ | H | 1.00 | 28000 | 20.0 | 2-amino-2-methyl-1-propanol | 12.2 | 185 | 3.7 | NMP | 32.2 | 76.3 |
| Ex. 1-12 | A-2 | CH₃ | i-C₅H₁₁ | C₁₈H₃₇ | H | 1.00 | 28000 | 20.0 | 2-amino-2-methyl-1-propanol | 12.2 | 185 | 100 | NMP | 32.2 | 70.0 |
| Ex. 1-13 | A-2 | CH₃ | i-C₅H₁₁ | C₁₈H₃₇ | H | 1.00 | 28000 | 20.0 | 2-amino-2-methyl-1-propanol | 12.2 | 185 | 20.0 | NMP | 32.2 | 60.0 |
| Ex. 1-14 | A-2 | CH₃ | i-C₅H₁₁ | C₁₈H₃₇ | H | 1.00 | 28000 | 20.0 | 2-N-dibutylaminoethanol | 10.0 | 226 | 20.0 | NMP | 32.2 | 60.0 |
| Ex. 1-15 | A-2 | CH₃ | i-C₅H₁₁ | C₁₈H₃₇ | H | 1.00 | 28000 | 20.0 | 1-phenylmethanamine | 10.5 | 184 | 20.0 | NMP | 32.2 | 60.0 |
| Ex. 1-16 | A-2 | CH₃ | i-C₅H₁₁ | C₁₈H₃₇ | H | 1.00 | 28000 | 20.0 | 2-dimethylaminoethanol | 11.3 | 134 | 20.0 | NMP | 32.2 | 60.0 |
| Ex. 1-17 | A-2 | CH₃ | i-C₅H₁₁ | C₁₈H₃₇ | H | 1.00 | 28000 | 20.0 | N-methyl-2-aminoethanol | 12.5 | 175 | 20.0 | NMP | 32.2 | 60.0 |
| Ex. 1-18 | A-2 | CH₃ | i-C₅H₁₁ | C₁₈H₃₇ | H | 1.00 | 28000 | 20.0 | N-ethyldiethanolamine | 13.4 | 251 | 20.0 | NMP | 32.2 | 60.0 |
| Comp. Ex. 1-1 | A-8 | CH₃ | i-C₅H₁₁ | C₁₄H₂₉ | H | 1.00 | 28000 | 20.0 | - | - | - | 0 | NMP | 32.2 | 80.0 |
| Comp. Ex. 1-2 | A-2 | CH₃ | i-C₅H₁₁ | C₁₈H₃₇ | H | 1.00 | 28000 | 20.0 | - | - | - | 0 | toluene | 2.38 | 80.0 |
| Comp. Ex. 1-3 | A-2 | CH₃ | i-C₅H₁₁ | C₁₈H₃₇ | H | 1.00 | 28000 | 20.0 | - | - | - | 0 | dimethylformamide | 36.7 | 80.0 |
| Comp. Ex. 1-4 | A-2 | CH₃ | i-C₅H₁₁ | C₁₈H₃₇ | H | 1.00 | 28000 | 20.0 | - | - | - | 0 | 2-propanol | 19.7 | 80.0 |
| Comp. Ex. 1-5 | A-2 | CH₃ | i-C₅H₁₁ | C₁₈H₃₇ | H | 1.00 | 28000 | 20.0 | - | - | - | 0 | ethanol | 24.6 | 80.0 |

| | | | | | | | | | | | | | | | |
|---|---|---|---|---|---|---|---|---|---|---|---|---|---|---|---|
| 1) The content in the dispersant composition (mass%) 2) Unit of the SP value [(cal/cm³)^{1/2}] | | | | | | | | | | | | | | | |

For the dispersant composition in Comparative Example 1-3, it was visually observed that the dispersant A-2 was insoluble in the organic solvent (dimethylformamide) even after the mixture of the dispersant A-2 and the organic solvent was stirred at 50°C for 5 hours with a rotational speed of 200 rpm (see Comparative Example 2-3 shown in Table 2). For the other dispersant compositions, it was visually observed that they were solutions having a homogeneous and transparent appearance, and there was no undissolved residue of the dispersant.

### 3. Preparation of conductive material slurry

### (Example 2-1)

MW carbon nanotubes (manufactured by LG Chem, multi-walled carbon nanotube BT-1003M, average diameter 12.5 nm, length: 10 to 70 µm (catalog values)) as fibrous carbon nanostructures, the dispersant composition in Example 1-1, and additional NMP were mixed to prepare a coarse dispersion containing 1.5 parts by mass of the MW carbon nanotubes (CNTs), 0.30 part by mass of the dispersant, and 98.2 parts by mass of NMP.

Then, the coarse dispersion was placed in a high-pressure homogenizer (manufactured by Beryu Corporation, product name: "BERYU MINT") equipped with a multi-stage pressure regulator (multi-stage step-down transformer) for applying a back pressure during dispersion. The coarse dispersion was subjected to a dispersion treatment at a pressure of 120 MPa. Specifically, a shear force was applied to the coarse dispersion so that the MW carbon nanotubes were dispersed, while the back pressure was being applied Thus, a conductive material slurry in Example 2-1 was prepared as a fibrous carbon nanostructure dispersion. The dispersion treatment was performed by circulating the dispersion in such a way that the dispersion was discharged from and injected back into the high-pressure homogenizer. This circulation was repeated 20 times. The dispersion was discharged and injected at 45 g/min.

The viscosity of the conductive material slurry in Example 2-1 was 17 mPa·s at 25°C.

### (Examples 2-2 to 2-18, Comparative Examples 2-1 to 2-5)

Conductive material slurries in Examples 2-2 to 2-18 and conductive material slurries in Comparative Examples 2-1 to 2-5 were prepared in the same manner as the preparation of the conductive material slurry in Example 2-1 by using the dispersant compositions in Examples 1-2 to 1-18 and the dispersant compositions in Comparative Examples 1-1 to 1-5, respectively, instead of the dispersant composition in Example 1-1. The composition of each conductive material slurry is as shown in Table 2.

**[TABLE 2]**

| Table 2 | Conductive material slurry | | | | | | | | | | Evaluation | |
|---|---|---|---|---|---|---|---|---|---|---|---|---|
| | CNT | Dispersant | | | Organic amine B2 | | | Organic solvent | | | | |
| | Part by mass | Type | Part by mass | Part by mass (with respect to CNT)²⁾ | Type | Part by mass | Part by mass (with respect to CNT)³⁾ | Type | Relative permittivity | Part by mass¹⁾ | Slurry viscosity (mPa·s) | Particle size of dispersed CNT (nm) |
| Ex. 2-1 | 1.5 | A-1 | 0.30 | 20 | - | 0 | 0 | NMP | 32.2 | 98.2 | 17 | 238 |
| Ex. 2-2 | 1.5 | A-2 | 0.30 | 20 | - | 0 | 0 | NMP | 32.2 | 98.2 | 9 | 186 |
| Ex. 2-3 | 1.5 | A-3 | 0.30 | 20 | - | 0 | 0 | NMP | 32.2 | 98.2 | 7 | 208 |
| Ex. 2-4 | 1.5 | A-4 | 0.75 | 50 | - | 0 | 0 | NMP | 32.2 | 97.8 | 5 | 208 |
| Ex. 2-5 | 1.5 | A-5 | 0.30 | 20 | - | 0 | 0 | NMP | 32.2 | 98.2 | 11 | 197 |
| Ex. 2-6 | 1.5 | A-6 | 0.30 | 20 | - | 0 | 0 | NMP | 32.2 | 98.2 | 11 | 197 |
| Ex. 2-7 | 1.5 | A-7 | 0.30 | 20 | - | 0 | 0 | NMP | 32.2 | 98.2 | 10 | 217 |
| Ex. 2-8 | 1.5 | A-9 | 0.30 | 20 | - | 0 | 0 | NMP | 32.2 | 98.2 | 9 | 188 |
| Ex. 2-9 | 1.5 | A-10 | 0.30 | 20 | - | 0 | 0 | NMP | 32.2 | 98.2 | 9 | 209 |
| Ex. 2-10 | 1.5 | A-11 | 0.30 | 20 | - | 0 | 0 | NMP | 32.2 | 98.2 | 10 | 202 |
| Ex. 2-11 | 1.5 | A-2 | 0.30 | 20 | 2-amino-2-methyl-1-propanol | 0.04 | 3 | NMP | 32.2 | 98.2 | 9 | 186 |
| Ex. 2-12 | 1.5 | A-2 | 0.30 | 20 | 2-amino-2-methyl-1-propanol | 0.15 | 10 | NMP | 32.2 | 98.1 | 9 | 186 |
| Ex. 2-13 | 1.5 | A-2 | 0.30 | 20 | 2-amino-2-methyl-1-propanol | 0.30 | 20 | NMP | 32.2 | 97.9 | 6 | 186 |
| Ex. 2-14 | 1.5 | A-2 | 0.30 | 20 | 2-N-dibutylaminoethanol | 0.30 | 20 | NMP | 32.2 | 97.9 | 7 | 188 |
| Ex. 2-15 | 1.5 | A-2 | 0.30 | 20 | 1-phenylmethanamine | 0.30 | 20 | NMP | 32.2 | 97.9 | 8 | 190 |
| Ex. 2-16 | 1.5 | A-2 | 0.30 | 20 | 2-dimethylaminoethanol | 0.30 | 20 | NMP | 32.2 | 97.9 | 7 | 184 |
| Ex. 2-17 | 1.5 | A-2 | 0.30 | 20 | N-methyl-2-aminoethanol | 0.30 | 20 | NMP | 32.2 | 97.9 | 6 | 185 |
| Ex. 2-18 | 1.5 | A-2 | 0.30 | 20 | N-ethyldiethanolamine | 0.30 | 20 | NMP | 32.2 | 97.9 | 7 | 187 |
| Comp. Ex. 2-1 | 1.0 | A-8 | 0.50 | 50 | - | 0 | 0 | NMP | 32.2 | 98.5 | 39 | 442 |
| Comp. Ex. 2-2 | 1.0 | A-2 | 0.50 | 50 | - | 0 | 0 | toluene | 2.38 | 98.5 | 181 | 5312 |
| Comp. Ex. 2-3 | 1.0 | A-2 | 0.50 | 50 | - | 0 | 0 | dimethylformamide | 36.7 | 98.5 | The dispersant was insoluble in the organic solvent. | |
| Comp. Ex. 2-4 | 1.0 | A-2 | 0.50 | 50 | - | 0 | 0 | 2-propanol | 19.7 | 98.5 | 375 | 503 |
| Comp. Ex. 2-5 | 1.0 | A-2 | 0.50 | 50 | - | 0 | 0 | ethanol | 24.6 | 98.5 | 229 | 40727 |

| | | | | | | | | | | | | |
|---|---|---|---|---|---|---|---|---|---|---|---|---|
| 1) The total amount of the organic solvent contained in the dispersant composition and the organic solvent added in the preparation of the conductive material slurry 2) The amount of the dispersant with respect to 100 parts by mass of CNTs in the conductive material slurry 3) The amount of the organic amine B2 with respect to 100 parts by mass of CNTs in the conductive material slurry | | | | | | | | | | | | |

As shown in Table 2, it is confirmed that the conductive material slurries in Examples have a significantly lower viscosity than the conductive material slurries in Comparative Examples, and that the CNTs dispersed in the conductive material slurries in Examples have a smaller particle size and better dispersibility than those dispersedin the conductive material slurries in Comparative Examples.

### 4. Preparation of positive electrode paste

### (Example 3-1)

First, 2.06 g of the conductive material slurry in Example 2-1, 1.03 g of NMP, and 1.9 g of an NMP solution of PVDF (8%) (KF polymer L #7208 manufactured by KUREHA CORPORATION) were weighed in a 50 ml sample bottle and stirred uniformly with a spatula. Then, this mixture was blended with 12 g of LiCoO₂ (CELLSEED manufactured by NIPPON CHEMICAL INDUSTRIAL CO., LTD.) as a positive electrode active material, and stirred again with a spatula until the mixture became homogeneous. The resulting mixture was further stirred with a rotation-revolution mixer (AR-100 manufactured by THINKY CORPORATION) for 5 minutes. Thus, a positive electrode paste in Example 3-1 was prepared

The mass ratio of the positive electrode active material, the binder (PVDF), the conductive materials (carbon nanotubes), and the dispersant was 98.45 : 1.25 : 0.25 : 0.05 (in terms of solid content). The solid content (% by mass) of the positive electrode paste was 71.7% by mass. In this case, the total solid content of the positive electrode paste refers to the total mass of the positive electrode active material, the binder, the conductive materials, and the dispersant that are contained in the positive electrode paste.

### (Examples 3-2 to 3-10, Comparative Examples 3-1 to 3-5)

Positive electrode pastes in Examples 3-2 to 3-10 and positive electrode pastes in Comparative Examples 3-1 to 3-5 were prepared in the same manner as the positive electrode paste in Example 3-1, except that the conductive material slurries in Examples 2-2 to 2-10 and the conductive material slurries in Comparative Examples 2-1 to 2-5 were used, respectively, instead of the conductive material slurry in Example 2-1.

Positive electrode coatings were produced, and the coating resistance of each of the positive electrode coatings was measured in accordance with the method described in the above [Measurement of resistance value of positive electrode coating). Table 3 shows the results.

**[TABLE 3]**

| Table 3 | Coating resistance (Ω·cm) |
|---|---|
| Ex. 3-1 | 38 |
| Ex. 3-2 | 36 |
| Ex. 3-3 | 31 |
| Ex. 3-4 | 23 |
| Ex. 3-5 | 94 |
| Ex. 3-6 | 32 |
| Ex. 3-7 | 37 |
| Ex. 3-8 | 37 |
| Ex. 3-9 | 38 |
| Ex. 3-10 | 31 |
| Comp. Ex. 3-1 | 126 |
| Comp. Ex. 3-2 | not measurable |
| Comp. Ex. 3-3 | not measurable |
| Comp. Ex. 3-4 | not measurable |
| Comp. Ex. 3-5 | not measurable |

As shown in Table 3, the coating resistance of each of the positive electrode coatings composed of the positive electrode pastes in Examples is significantly lower than that of the positive electrode coating composed of the positive electrode paste in Comparative Example 3-1. In Comparative Examples 3-2 to 3-5, since the dispersion of the carbon material-based conductive materials was insufficient, the coating resistance was increased beyond the upper limit of the measuring device and could not be measured

### 5. Preparation of positive electrode for power storage device

### (Example 4-1)

First, 2.6 g of the conductive material slurry in Example 2-2, 0.24 g of acetylene black (Li-400 manufactured by Denka Company Limited, primary particle size: 48 nm, specific surface area: 39 m²/g (catalog values)) as additional carbon material-based conductive materials, 0.04 g of an additional dispersant composition in Example 1-2, and 3.9 g of an NMP solution of PVDF (KF polymer L #7208 manufactured by KUREHA CORPORATION, solid content: 8%, binder solution) were weighed in a 50 ml sample bottle and stirred uniformly with a spatula. Then, this mixture was blended with 15 g of LCO (lithium cobalt oxide, "GSL-5D" manufactured by Beijing Easpring Material Technology Co., Ltd) as a positive electrode active material and 2.4 g of NMP as an additional solvent, and stirred again with a spatula until the mixture became homogeneous. The resulting mixture was further stirred with a rotation-revolution mixer (AR-100 manufactured by THINKY CORPORATION) for 10 minutes. Thus, a positive electrode paste was prepared The mass ratio of the positive electrode active material, the binder (PVDF), the conductive materials (carbon nanotubes), the additional conductive material (acetylene black), and the polymer A (dispersant A-2) was 96.2 : 1.95 : 0.25: 1.5 : 0.1 (in terms of solid content). The solid content (% by mass) of the positive electrode paste was 65% by mass. In this case, the total solid content of the positive electrode paste refers to the total mass of the polymer A, the positive electrode active material, the conductive materials, and the binder that are containedin the positive electrode paste. Table 4 shows the content (effective content, mass%) of each component in the positive electrode paste thus prepared This positive electrode paste was used to produce a power storage device. Table 5 shows the results of measurement of the direct current resistance (DCR) of the power storage device.

### (Examples 4-2 to 4-9)

Positive electrode pastes in Examples 4-2 to 4-9 were prepared in the same manner as the positive electrode paste in Example 4-1, except that the type of the conductive material slurry and the additional dispersant composition were changed as shown in Table 4. These positive electrode pastes were used to produce power storage devices. Table 5 shows the results of measurement of the direct current resistance (DCR) of the power storage devices.

**[TABLE 4]**

| Table 4 | Positive electrode paste | | | | | | | | | | | |
|---|---|---|---|---|---|---|---|---|---|---|---|---|
| | Positive electrode active material (LCO) | | Conductive material slurry | | | | | Additional conductive material | Additional dispersant composition for electrode of power storage device | | Binder solution (PVDF 8% solution) | Additional solvent (NMP) |
| | Content²⁾ (mass%) | Content in coating (mass%) | Type | Content (mass%)²⁾ | | | | Content²⁾ (mass%) | Type | Content²⁾ (mass%) | Content²⁾ (mass%) | Content²⁾ (mass%) |
| | | | | Conductive material slurry | Conductive material (CNT) | Polymer A | Organic amine B2 | AB¹⁾ | | | | |
| Ex. 4-1 | 62.10% | 96.20% | Ex. 2-2 | 10.77% | 0.162% | 0.032% | 0% | 0.99% | Ex. 1-2 | 0.2% | 16.0% | 9.94% |
| Ex. 4-2 | 62.10% | 96.20% | Ex. 2-11 | 10.77% | 0.162% | 0.032% | 0.004% | 0.99% | Ex. 1-11 | 0.2% | 16.0% | 9.94% |
| Ex. 4-3 | 62.10% | 96.20% | Ex. 2-12 | 10.77% | 0.162% | 0.032% | 0.016% | 0.99% | Ex. 1-12 | 0.2% | 16.0% | 9.94% |
| Ex. 4-4 | 62.10% | 96.20% | Ex. 2-13 | 10.77% | 0.162% | 0.032% | 0.032% | 0.99% | Ex. 1-13 | 0.2% | 16.0% | 9.94% |
| Ex. 4-5 | 62.10% | 96.20% | Ex. 2-14 | 10.77% | 0.162% | 0.032% | 0.032% | 0.99% | Ex. 1-14 | 0.2% | 16.0% | 9.94% |
| Ex. 4-6 | 62.10% | 96.20% | Ex. 2-15 | 10.77% | 0.162% | 0.032% | 0.032% | 0.99% | Ex. 1-15 | 0.2% | 16.0% | 9.94% |
| Ex. 4-7 | 62.10% | 96.20% | Ex. 2-16 | 10.77% | 0.162% | 0.032% | 0.032% | 0.99% | Ex. 1-16 | 0.2% | 16.0% | 9.94% |
| Ex. 4-8 | 62.10% | 96.20% | Ex. 2-17 | 10.77% | 0.162% | 0.032% | 0.032% | 0.99% | Ex. 1-17 | 0.2% | 16.0% | 9.94% |
| Ex. 4-9 | 62.10% | 96.20% | Ex. 2-18 | 10.77% | 0.162% | 0.032% | 0.032% | 0.99% | Ex. 1-18 | 0.2% | 16.0% | 9.94% |

| | | | | | | | | | | | | |
|---|---|---|---|---|---|---|---|---|---|---|---|---|
| 1) Acetylene black 2) The content in the positive electrode paste (mass%) | | | | | | | | | | | | |

**[TABLE 5]**

| Table 5 | Positive electrode | | | | | | | | Evaluation of power storage device |
|---|---|---|---|---|---|---|---|---|---|
| | Dispersant composition used in preparation of positive electrode | Physical property value of organic amine B2 in dispersant composition | | Content of positive electrode active material (mass%) | Content of conductive material D (mass%) | | Content of binder (mass%) | Content of polymer A (mass%) | |
| | | SP value [(cal/cm³)^{1/2}] | Boiling point (°C) | | CNT | AB¹⁾ | | | Direct current resistance (Ω) |
| Ex. 4-1 | Ex. 1-2 | - | - | 96.2 | 0.25 | 1.5 | 1.95 | 0.1 | 12.80 |
| Ex. 4-2 | Ex. 1-11 | 12.2 | 185 | 96.2 | 0.25 | 1.5 | 1.95 | 0.1 | 12.77 |
| Ex. 4-3 | Ex. 1-12 | 12.2 | 185 | 96.2 | 0.25 | 1.5 | 1.95 | 0.1 | 12.25 |
| Ex. 4-4 | Ex. 1-13 | 12.2 | 185 | 96.2 | 0.25 | 1.5 | 1.95 | 0.1 | 11.85 |
| Ex. 4-5 | Ex. 1-14 | 10.0 | 226 | 96.2 | 0.25 | 1.5 | 1.95 | 0.1 | 12.75 |
| Ex. 4-6 | Ex. 1-15 | 10.5 | 184 | 96.2 | 0.25 | 1.5 | 1.95 | 0.1 | 12.50 |
| Ex. 4-7 | Ex. 1-16 | 11.3 | 134 | 96.2 | 0.25 | 1.5 | 1.95 | 0.1 | 12.04 |
| Ex. 4-8 | Ex. 1-17 | 12.5 | 175 | 96.2 | 0.25 | 1.5 | 1.95 | 0.1 | 11.97 |
| Ex. 4-9 | Ex. 1-18 | 13.4 | 251 | 96.2 | 0.25 | 1.5 | 1.95 | 0.1 | 12.75 |

| | | | | | | | | | |
|---|---|---|---|---|---|---|---|---|---|
| 1) Acetylene black | | | | | | | | | |

The power storage devices including the positive electrode coatings composed of the positive electrode pastes in Examples 4-2 to 4-9, each of which was prepared by using the dispersant composition containing the organic amine B2, have lower direct current resistance than the power storage device including the positive electrode coating composed of the positive electrode paste in Example 4-1. The results confirm that the presence of the organic amine B2 in the positive electrode paste can provide a power storage device with lower resistance.

### Industrial Applicability

The dispersant composition of the present disclosure can improve the dispersibility of the carbon material-based conductive materials, and thus can reduce the viscosity of the carbon material-based conductive material slurry. Moreover, the use of the dispersant composition of the present disclosure to prepare a positive electrode paste can reduce the viscosity of the positive electrode paste, and can also contribute to both a reduction in resistance of the positive electrode coating and a reduction in resistance of the power storage device.

## Claims

1. A dispersant composition for an electrode of a power storage device, comprising:
a polymer containing a repeating unit represented by the following general formula (1); and
an organic solvent,
wherein the organic solvent has a relative permittivity of 25.0 or more and 35.0 or less at 25°C: 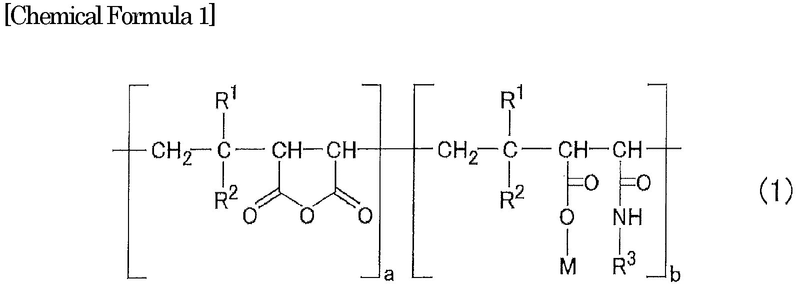
in the general formula (1), R¹ represents hydrogen or a methyl group,
R² represents hydrogen, CₙH₂ₙ₊₁, i-CₙH₂ₙ₊₁, C₆H₅, or an aromatic group with or without a substituent, and n represents 1 or more and 10 or less,
R³ represents CₘH₂ₘ₊₁ or i-CₘH₂ₘ₊₁, and m represents 16 or more and 22 or less,
M represents hydrogen, NH₄, a metal that gives a salt soluble in the organic solvent, or organic ammonium soluble in the organic solvent, and
a and b each represent a mole fraction, provided that a + b = 1, and b satisfies 0.50 ≤ b ≤ 1.00.

2. The dispersant composition according to claim 1, further comprising one or more than one type of organic amine B2 soluble in the organic solvent.

3. The dispersant composition according to claim 2, wherein the organic amine B2 has an SP value of 9.5 (cal/cm³)^{1/2} or more and 14 (cal/cm³)^{1/2} or less and a boiling point of 260°C or less.

4. The dispersant composition according to claim 2 or 3, wherein a content of the organic amine B2 is 10 parts by mass or more and 300 parts by mass or less with respect to 100 parts by mass of a content of the polymer.

5. The dispersant composition according to any one of claims 1 to 4, wherein the organic solvent is N -methylpyrrolidone.

6. A carbon material-based conductive material slurry comprising:
the dispersant composition according to any one of claims 1 to 5; and
carbon material-based conductive materials,
wherein an organic solvent contained in the carbon material-based conductive material slurry has a relative permittivity of 25.0 or more and 35.0 or less at 25°C.

7. The carbon material-based conductive material slurry according to claim 6, wherein the carbon material-based conductive materials include at least one selected from the group consisting of carbon black and carbon nanotubes.

8. A positive electrode paste for a power storage device, comprising:
the dispersant composition according to any one of claims 1 to 5;
a positive electrode active material; and
carbon material-based conductive materials,
wherein an organic solvent contained in the positive electrode paste has a relative permittivity of 25.0 or more and 35.0 or less at 25°C.

9. A method for producing a positive electrode for a power storage device by using the positive electrode paste according to claim 8.

10. A method for producing a power storage device by using a positive electrode for a power storage device that is produced by the method according to claim 9.
